(19) Europäisches Patentamt
European Patent Office
Office européen des brevets

(11) **EP 1 784 978 B1**

(12) **EUROPÄISCHE PATENTSCHRIFT**

(45) Veröffentlichungstag und Bekanntmachung des Hinweises auf die Patenterteilung:
**10.11.2010 Patentblatt 2010/45**

(21) Anmeldenummer: **05776358.3**

(22) Anmeldetag: **02.08.2005**

(51) Int Cl.:
*H04N 5/74* (2006.01)        *H04N 17/00* (2006.01)

(86) Internationale Anmeldenummer:
**PCT/DE2005/001356**

(87) Internationale Veröffentlichungsnummer:
**WO 2006/024254 (09.03.2006 Gazette 2006/10)**

(54) **VERFAHREN UND VORRICHTUNG ZUR DARSTELLUNG EINES DIGITALEN BILDES AUF EINER GEOMETRISCH UND PHOTOMETRISCH NICHT-TRIVIALEN OBERFLÄCHE**

METHOD AND DEVICE FOR REPRESENTING A DIGITAL IMAGE ON A SURFACE WHICH IS NON-TRIVIAL IN TERMS OF ITS GEOMETRY AND PHOTOMETRY

PROCEDE ET DISPOSITIF POUR REPRESENTER UNE IMAGE NUMERIQUE SUR UNE SURFACE NON TRIVIALE D'UN POINT DE VUE GEOMETRIQUE OU PHOTOMETRIQUE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **30.08.2004   DE 102004042133**
**23.10.2004   DE 102004051607**
**21.03.2005   DE 102005013428**

(43) Veröffentlichungstag der Anmeldung:
**16.05.2007   Patentblatt 2007/20**

(73) Patentinhaber: **BAUHAUS-UNIVERSITÄT WEIMAR**
**99423 Weimar (DE)**

(72) Erfinder:
• **KLEMMER, Thomas**
**Santa Barbara, CA, 93105 (US)**
• **BIMBER, Oliver**
**35394 Giessen (DE)**
• **EMMERLING, Andreas**
**91058 Erlangen (DE)**

(74) Vertreter: **Liedtke, Klaus**
**Liedtke & Partner**
**Patentanwälte**
**Elisabethstrasse 10**
**99096 Erfurt (DE)**

(56) Entgegenhaltungen:
**EP-A- 1 434 434      EP-A- 1 439 694**
**US-B1- 6 367 933      US-B1- 6 755 537**

• **SUKTHANKAR R ET AL: "AUTOMATIC KEYSTONE CORRECTION FOR CAMERA-ASSISTED PRESENTATION INTERFACES" LECTURE NOTES IN COMPUTER SCIENCE, SPRINGER VERLAG, NEW YORK, NY, US, 14. Oktober 2000 (2000-10-14), Seiten 607-614, XP001148734 ISSN: 0302-9743**

## Beschreibung

Die Erfindung betrifft ein Verfahren und eine Vorrichtung zur Darstellung eines digitalen Bildes auf einer Projektionsfläche wobei mittels eines Projektors ein Inhalt eines Bildpuffers auf die Projektionsfläche projiziert wird.

Im Sinne der Erfindung ist eine Projektionsfläche eine prinzipiell beliebige Fläche. Insbesondere kann eine Projektionsfläche im Sinne der Erfindung eine geometrisch und photometrisch nicht-triviale Oberfläche sein, die beispielsweise beliebig dreidimensional geformt und/oder beliebig texturiert ist. Eine Projektionsfläche im Sinne der Erfindung kann insbesondere auch aus mehreren Teilflächen bestehen.

Aus DE 102 51 217 B3 ist ein System zur Autokalibrierung von Multiprojektorsystemen bekannt, welches mindestens zwei Projektoren, eine Digitalkamera und eine Ansteuerungseinheit zur Ansteuerung der Projektoren und der Kamera aufweist, wobei eine Autokalibrierung mit den Schritten Erzeugung, Aufnahme und Bildfilterung von Streifenmustern, Finden der größtmöglichen gemeinsamen Projektionsfläche, Berechnung der Warp-Felder und Imagewarping erfolgt. Bei diesem Verfahren werden mehrere Videoprojektoren durch Aufnahme von auf eine Projektionsfläche projizierten vertikalen und horizontalen Streifenmustern mit einer Digitalkamera kalibriert. Die Streifen haben jeweils einen konstanten Abstand voneinander, der je nach Komplexität der Geometrie der Projektionsfläche zu wählen ist. Die Streifen werden für jeden Projektor separat aufgenommen, so dass eine Anzahl von Aufnahmen entsteht, die der doppelten Anzahl von Projektoren entspricht. Zusätzlich wird ein Bild aufgenommen, in dem alle Projektoren ein schwarzes Bild projizieren. Eine Entzerrung der Projektionsflächengeometrie findet linear interpoliert zwischen diskreten Punkten eines Gitters dar, dessen Maschenweite durch die Abstände der Streifenmuster bestimmt wird, die nicht beliebig verringert werden können. Eine pixelgenaue Entzerrung ist mit diesem System nicht möglich. Nachteilig ist dabei weiterhin, dass eine nicht-weiße Texturierung oder Unterschiede in der Texturierung der Projektionsfläche die Darstellung beeinträchtigen.

EP-A1434434 zeigt ein ähnlicher system, welches pixelgenane Echtzeit-Entzerrung mittels eines Warp-Feldes ermöglicht.

Aus Guehring, "Dense 3d surface acquisition by structures light using off-theshelf-components", Proceedings of SPIE: Videometrics and Optical Methods for 3D Shape Measuring, 2001, vol. 4309, S. 220-231, ist es bekannt, Spalten-Zeilen-kodierte Muster mit Phasenverschiebungen zu projizieren, um Oberflächenstrukturen zu erfassen.

Es sind diverse Algorithmen und Verfahren entwickelt worden, um durch Auswertung von Pixelintensitäten eine Aussage über die Schärfe eines Bildes treffen zu können. Solche Algorithmen werden zum Beispiel von passiven Autofokusmechanismen in Digitalkameras verwendet. Dabei wird eine Reihe von Kamerabildem bei unterschiedlichen Linsenstellungen so erzeugt, dass diese Bilder unterschiedlich fokussiert sind. Diejenige Linsenstellung, bei deren Bild die Schärfe die maximale Ausprägung hat, erzeugt folglich die bestfokussierte Aufnahme. Eine genaue Schärfegradbestimmung ist jedoch abhängig von der Anzahl gut erkennbarer Kanten in einer Abbildung einer Szene. Aufnahmen natürlicher Szenen besitzen, insbesondere bei Dunkelheit, oft keinen hohen Kontrast und weisen damit keine ausreichende Anzahl von Kanten auf. Dies beeinträchtigt die Qualität der passiven Autofokusmechanismen der Kameras.

Herkömmliche Projektoren können lediglich auf genau eine Bildebene fokussiert werden. Werden damit Bilder auf komplexe dreidimensional strukturierte Flächen mit variierenden Entfernungen projiziert, so verschwimmen sie mit dem Abstand des jeweiligen Reflexionsbildpunktes von der fokussierten Bildebene zunehmend. Dies gilt insbesondere auch für bereits an sich unscharfe Bilddetails, die für eine korrekte Tiefenwahrnehmung des Bildinhaltes notwendig sind. Sie werden durch defokussierte Projektion noch unschärfer, wodurch die Tiefenwahrnehmung verfälscht wird.

Im Stand der Technik verwenden kommerziell verfügbare Projektoren sogenanntes strukturiertes Licht in Verbindung mit einer integrierten Kamera, um auf ebenen Projektionsschirmen für das gesamte projizierte Bild einen einzelnen Gesamtschärfegrad automatisch zu ermitteln und die Darstellung hinsichtlich der Fokussierung auf einen maximalen Schärfegrad anzupassen. Ähnlich den passiven Autofokusmechanismen von Kameras werden dabei Lichtbalken bei unterschiedlichen Linsenstellungen projiziert. Die Aufnahmen der eingebauten Kamera werden ausgewertet, um die Linsenstellung zu bestimmen, bei der die Schärfe der Aufnahme maximal ist.

Ein ähnliches Verfahren wird beispielsweise in Tsai, D.M. und Chou, C.C., "A fast measure for video display inspection", Machine Vision and Applications, Vol. 14, S. 192-196, 2003 beschrieben. Es wird zur schnellen Schärfegradbestimmung von Röhrenmonitoren genutzt. Mit dem Verfahren können Schärfegrade in Echtzeit berechnet werden. Der Monitor zeigt dabei verschiedene binäre Testmuster. Die Schärfegradmessung basiert auf der Annahme, dass der Anteil heller Bereiche zunimmt, je unschärfer der Monitor ist, während der Anteil dunkler Bereiche abnimmt. Das Verfahren wird auf Bilder angewendet, die mit einer Kamera aufgenommen werden. Die Testmuster im Kamerabild werden mit Hilfe des momenterhaltenden Prinzips in einen Vordergrund und einen Hintergrund zerlegt. Der Anteil der Pixel im Vordergrund wird als Schärfegrad berechnet.

Mit einem solchen Verfahren erfolgt lediglich eine insgesamte Schärfemessung für das gesamte Bild. Wird ein solches Verfahren für Projektoren verwendet, um einen maximalen Schärfegrad über die Fokussierung einzustellen, so werden bei unebener Projektionsfläche Bildteile, die außerhalb der fokussierten Bildebene liegen, unscharf dargestellt.

Um dieses Problem zu umgehen, verwenden Planetarien oder andere Darstellungen virtueller Realität Laserprojektoren, die die Projektionsfläche zeilen- und spaltenweise überstreichen, anstelle von herkömmlichen Lampenprojektoren, um scharfe Bilder auf gekrümmten Projektionsschirmen darzustellen, beispielsweise in Kuppeln oder Zylinderräumen. Solche Projektoren verfügen über eine hohe Tiefenschärfe. Sie erlauben scharfe Projektionen selbst auf geometrisch sehr komplexen Oberflächen, wenn Laserprojektoren ohne Linsenoptik verwendet werden. Beschrieben wird ein entsprechendes Verfahren in Biehling, W., Deter, C., Dube, S., Hill, B., Helling, S., Isakovic, K., Klose, S., und Schiewe, K., "LaserCave - Some Building Blocks for immersive Screens", Proc. of Int. Status Conference on Virtual - and Augmented Reality, Leipzig, 2004. Dort wird ein Projektionsverfahren mit zusammengesetzter Projektionsfläche vorgestellt, das die Überlappungsbereiche der Abbildungen verschiedener Projektoren so ausgleicht, dass die Projektionsfläche gleichmäßig ausgeleuchtet wird. Das System kann einfache unebene Geometrien von Projektionsflächen ausgleichen. Damit sind Projektionen beispielsweise auf kuppelförmige Oberflächen möglich.

Diese Lösung ist jedoch äußerst kostenaufwendig. Der Preis eines einzigen Laserprojektors ist derzeit etwa 500- bis 700-mal so hoch wie der eines herkömmlichen digitalen Lichtprojektors. Die verwendeten Laserprojektoren haben außerdem einen Größennachteil. Sie bestehen aus Komponenten, die Laserstrahlen für die RGB-Farbkanäle erzeugen, und scannerbasierten Projektionskomponenten, die durch bewegliche Spiegel den Laserstrahl ablenken. Daher ist ein mobiler Einsatz von Laserprojektoren aufwendig.

Es sind einige Bildrekonstruktionsverfahren bekannt, die eine Fotografie mit virtuell hoher Tiefenschärfe aus mehreren registrierten Aufnahmen mit unterschiedlichen fokussierten Bildabschnitten zusammensetzen, beispielsweise aus Eltoukhy, H.A. und Kavusi, S., "A Computationally Efficient Algorithm for Multi-Focus Image Reconstruction", Proc. of SPIE Electronic Imaging, 2003. Hier wird dargelegt, dass die Berechnung der absoluten Gradienten zweier benachbarter Pixel zur Bestimmung eines Schärfegrades ausreichend ist. Außerdem wird darauf hingewiesen, dass die Abnahme der durchschnittlichen Intensität des Eingangsbildes durch Defokussion Einfluss auf die Schärfegradbestimmung und somit auf die Bildrekonstruktion haben kann. Es wird vorgeschlagen, die Intensitätswerte des Eingangsbildes vor der Berechnung zu normieren. Die Bildrekonstruktion erfolgt durch eine binäre Entscheidung basierend auf der Annahme, dass eine scharfe Aufnahme höhere Gradienten erzeugt als eine unscharfe. Ein überall scharfes Bild wird also rekonstruiert, indem die Pixelintensität desjenigen Eingangsbildes gewählt wird, das den höheren Gradienten aufweist. Der Schärfegrad wird nicht nur aus dem Gradienten des Pixels, sondern aus allen Gradienten der Pixel in einem kleinen Suchfenster bestimmt. Dadurch können Messschwankungen aufgrund von Rauschen berücksichtigt werden. Außerdem wird berücksichtigt, dass die Unschärfe eines Pixels die Intensitäten der Nachbarpixel und somit auch die Rekonstruktion selbst beeinflusst. Es wird vorgeschlagen, eine binäre Maske, die zur Entscheidungsfindung aus den Schärfegraden erstellt wurde, zu glätten, um weiche Übergange zwischen den Teilbildern zu erhalten. Die geglättete Maske hat dabei keinerlei Einfluss auf die Schärfequalität der Rekonstruktion.

Diese Verfahren sind nicht für die Darstellung von bewegten Inhalten mit aktiven Anzeigegeräten wie Projektoren geeignet.

Im Stand der Technik sind auch Bemühungen bekannt, um mit Projektoren gezielt künstliche Unschärfen auf Projektionsflächen zu erzielen, um beispielsweise die Tiefenwahrnehmung von projizierten Bildinhalten zu verbessern. So beschreibt die Veröffentlichung von Majumder, A. und Welch, G., "Computer Graphics Optique: Optical Superposition of Projected Computer Graphics", Proc. of Eurographics Workshop on Virtual Environment/ Immersive Projection Technology, 2001 ein Verfahren, graphische Unschärfeeffekte mittels überlagerter Projektionen zweier Projektoren zu erzeugen, deren Abbildungen sich vollständig überlappen, die aber unterschiedlich fokussiert sind, so dass ein Projektor eine scharfe, der andere gleichzeitig eine unscharfe Abbildung erzeugt.

Der Erfindung liegt die Aufgabe zu Grunde, ein Verfahren und eine Vorrichtung anzugeben, mit denen digitale Bilder so auf einen Untergrund mit beliebiger Oberflächenstruktur und/oder -färbung projiziert werden können, dass die durch den Untergrund verursachte Bildbeeinflussung zumindest für eine spezielle Betrachterperspektive pixelgenau kompensiert wird. Mit einer besonderen Ausgestaltung soll dadurch eine hohe Bildschärfe erreichbar sein.

Die Aufgabe wird erfindungsgemäß gelöst durch ein Verfahren, welches die in Anspruch 1 angegebenen Merkmale aufweist, und eine Vorrichtung, welche die in Anspruch 30 angegebenen Merkmale aufweist.

Vorteilhafte Ausgestaltungen der Erfindung sind Gegenstand der Unteransprüche.

Mit dem erfindungsgemäßen Verfahren gelingt es, ein digitales Bild, das auch aus einer sequentiell zu projizierenden Bildfolge stammen kann, mit einem oder mehreren Projektoren auch auf eine nicht-plane, geometrisch sehr komplexe, und farbige und/oder texturierte Oberfläche korrekt zu projizieren, indem Form- und Farbinformation der Oberfläche in eine Anpassung der digitalen Bilder miteinbezogen werden. Das Verfahren sieht dazu vor, dass das digitale Bild während eines Rendervorganges verarbeitet wird, indem es anhand eines zweidimensionalen Pixelversatzfeldes, das pixelgenaue Informationen über die Projektionsfläche enthält, geometrisch verzerrt und/oder anhand einer zweidimensionalen Oberflächentextur der Projektionsfläche farblich manipuliert wird, und dass wenigstens ein Teil des verarbeiteten Bildes in den Bildpuffer gerendert wird. Das Verfahren ist in der Lage, jeden Pixel des Projektors oder der Projektoren in Echtzeit zu verarbeiten und darzustellen.

Vorteilhaft ist insbesondere, dass eine geometrische und/oder farbliche Korrektur des digitalen Bildes auf einer pixelgenauen Basis erfolgt, dass die Vermessung der Oberflächengeometrie und der Oberflächentextur der Projektionsfläche und der Umgebungsbeleuchtung in einer Kalibrierung vollautomatisch und pixelgenau erfolgen kann, und dass das Verfahren mit moderner Computerhardware in Form von Pixelshadern mit hoher Geschwindigkeit, insbesondere in Echtzeit, ausführbar ist.

Vorteilhafterweise wird zunächst eine automatische Kalibrierung durchgeführt, bei der mittels des Projektors mindestens ein Kalibrierbild auf die Projektionsfläche projiziert wird und mittels einer Kamera das projizierte Kalibrierbild wenigstens teilweise aufgenommen und digitalisiert wird. Anhand der aufgenommenen, digitalisierten Kalibrierbilder können das Pixelversatzfeld und die Oberflächentextur der Projektionsfläche ermittelt werden.

Vorzugsweise wird die Kamera für die Kalibrierung an einer Betrachterposition angeordnet. Dadurch erhält der Betrachter während der eigentlichen Darstellung eine auf seine Position angepasste Projektion, wodurch das ursprünglich darzustellende digitale Bild für ihn unverzerrt und farblich korrekt erscheint.

Es ist vorzugsweise vorgesehen, dass zu mindestens einem projizierten Pixel eines projizierten Kalibrierbildes ein zugehöriger aufgenommener Pixel eines digitalisierten, aufgenommenen Kalibrierbildes identifiziert wird und ein zweidimensionaler geometrischer Versatz zwischen dem projizierten und dem aufgenommenen Pixel ermittelt und als ein Element des zweidimensionalen Pixelversatzfeldes gespeichert wird.

Eine schnelle und genaue Bestimmung des Pixelversatzfeldes gelingt, indem mehrere aufeinanderfolgende Kalibrierbilder wenigstens teilweise projiziert und aufgenommen werden, wobei projizierte Kalibrierbilder zeitlich gemultiplexte Streifenmuster enthalten, anhand derer zu projizierten Pixeln zugehörige aufgenommene Pixel ermittelt werden.

Vorteilhafterweise wird, falls mehrere digitalisierte, aufgenommene Kalibrierbilder vorliegen, ein Mittelwert mehrerer zu einem aufgenommenen Pixel gehörigen zweidimensionalen geometrischen Versätze ermittelt und als Element des zweidimensionalen Pixelversatzfeldes gespeichert. Dadurch kann eine Genauigkeit der durch das Pixelversatzfeld gegebenen Abbildung von unter einem Pixel erreicht werden.

Für eine besondere Ausführungsform ist vorgesehen, dass mittels des Projektors mindestens ein Testbild projiziert wird, wobei mittels der Kamera wiederholt Bilder aufgenommen und digitalisiert werden bis das Testbild in den digitalisierten, aufgenommenen Bildern identifiziert wird, wobei eine Latenzzeit zwischen dem Projizieren des Testbilds und dem Identifizieren des Testbilds gemessen wird. Die Latenzzeit kann so mit geringem Aufwand bestimmt und für anschließende Messungen verwendet werden, was deren Zuverlässigkeit erhöht.

Vorzugsweise wird im Falle eines einzelnen Projektors mittels des Projektors ein Rechteck mit weißer Farbe höchster Intensität als Kalibrierbild projiziert, wobei die Projektionsfläche nicht mit Umgebungsbeleuchtung beleuchtet wird, und ein davon digitalisiertes, aufgenommenes Kalibrierbild als zweidimensionale Oberflächentextur der Projektionsfläche verwendet wird. Im Falle mehrerer Projektoren wird vorteilhafterweise sequentiell mittels jedes Projektors ein Rechteck mit weißer Farbe höchster Intensität als Kalibrierbild projiziert, wobei die Projektionsfläche nicht mit Umgebungsbeleuchtung beleuchtet wird, und jeweils ein davon digitalisiertes, aufgenommenes Kalibrierbild als zweidimensionale Oberflächentextur der Projektionsfläche für den betreffenden Projektor verwendet wird. Diese Vorgehensweisen erlauben, die Oberflächentextur mit geringem Fehler und geringem Aufwand zu ermitteln.

In einer bevorzugten Ausgestaltung wird mittels des Projektors ein schwarzes Kalibrierbild projiziert und mittels der Kamera aufgenommen und digitalisiert, wobei dieses digitalisierte, aufgenommene Kalibrierbild als Umgebungsbeleuchtungstextur für das farbliche Manipulieren verwendet wird. Die Verwendung einer Umgebungsbeleuchtungstextur erhöht die Darstellungsqualität. Zur Beschleunigung der Kalibrierung und auch der eigentlichen Darstellung kann die Umgebungsbeleuchtungstextur bei der farblichen Manipulation vernachlässigt oder mit einem Wert von Null angesetzt werden.

Eine hohe Darstellungsqualität wird erreicht, indem ein für eine Oberflächentextur oder für eine Umgebungsbeleuchtungstextur verwendetes digitalisiertes, aufgenommenes Kalibrierbild zunächst anhand des zweidimensionalen Pixelversatzfeldes und/oder einer zugehörigen Pixelversatztextur in die Perspektive des Projektors verzerrt wird.

Eine hohe Genauigkeit der Farb- und Geometriekorrektur wird erreicht, indem eine Linsenverzerrung der Kamera nach dem Digitalisieren einer Aufnahme in dieser rechnerisch kompensiert wird.

Mit geringem Aufwand kann die Darstellung an vorgegebene Konturen angepasst werden, indem Aufnahmen der Kamera mit einer Maske versehen werden.

In einer vorteilhaften Ausführungsform wird die Kalibrierung wiederholt durchgeführt, wobei die Kamera in jedem Kalibrierdurchgang an einer anderen Position angeordnet wird, und das für die jeweilige Position ermittelte Pixelversatzfeld als Pixelversatzhilfsfeld und die ermittelte Oberflächentextur als Oberflächenhilfstextur der betreffenden Position zugeordnet gespeichert werden. Dies ermöglicht die Berücksichtigung mehrerer potentieller Betrachterpositionen. Die ermittelten Werte können gespeichert werden, so dass sie für eine spätere Auswahl zur Verfügung stehen. So kann die Betrachterposition gewechselt werden beziehungsweise die Darstellung für einen von mehreren Betrachtern optimiert werden. Eventuell ermittelte Schärfegradwerte brauchen nicht erneut bestimmt zu werden, sie sind unabhängig von der Perspektive des Betrachters, da sie sich lediglich auf Positionen der Projektoren beziehen.

Für eine besonders bevorzugte Ausgestaltung ist dabei vorgesehen, dass vor dem geometrischen Verzerren und farblichen Korrigieren eine Position des Betrachters dynamisch ermittelt wird und das Pixelversatzfeld und die Oberflächentextur anhand der für die verschiedenen Kamerapositionen ermittelten Pixelversatzhilfsfelder und Oberflächenhilfstexturen für die ermittelte Position ermittelt werden. Dadurch kann die Betrachterposition während der Darstellung ohne erneute Kalibrierung gewechselt werden.

Vorzugsweise wird dabei das Pixelversatzfeld ermittelt, indem zwischen den für die verschiedenen Kamerapositionen ermittelten Pixelversatzhilfsfeldern gewichtet interpoliert wird, und die Oberflächentextur ermittelt, indem zwischen den für die verschiedenen Kamerapositionen ermittelten Oberflächenhilfstexturen gewichtet interpoliert wird. Auf diese Weise können auch bei einer zuvor nicht kalibrierten Betrachterposition eine genaue Farb- und Geometriekorrektur für die Darstellung erreicht werden.

Im Folgenden können im Sinne der Erfindung anstelle von Schärfegradwerten auch Unschärfegradwerte oder Fokusfehlerwerte oder sinngemäße Entsprechungen mit entsprechender Umkehr oder Änderung der Auswahl- beziehungsweise Gewichtungsbedingungen für die Manipulationen verwendet werden.

Die Darstellung mehrerer digitaler Bilder auf einer Projektionsfläche gelingt mit großer Gesamtschärfe, indem mittels mehrerer Projektoren, die auf unterschiedliche Bildebenen eingestellt sind, Inhalte von betreffenden Bildpuffern, welche zu projizierende Intensitäten von Pixeln enthalten, in Bereiche der Projektionsfläche projiziert werden, wobei für einen Bildpunkt der Projektionsfläche, auf den mehrere Pixel aus unterschiedlichen Projektoren simultan projiziert werden, die durch die betreffenden Projektoren für diese Pixel zu projizierenden Intensitäten anhand von Schärfegradwerten der einzelnen betreffenden Pixel manipuliert werden. Durch die Manipulation der Intensitäten kann die Schärfe der Darstellung pixelweise und damit bestmöglich aus den lokalen Schärfegraden der unterschiedlichen Projektionen ausgewählt oder zusammengesetzt werden.

Vorteilhafterweise wird das Manipulieren dabei mittels mindestens eines Pixelshaders durchgeführt. Dies ermöglicht eine schnelle Durchführung des Verfahrens und damit die Echtzeitdarstellung von bewegten Bildinhalten in hoher Gesamtschärfe. Eine Textur, die die Schärfegradwerte enthält, kann dabei zweckmäßigerweise als Parametertextur für den Pixelshader verwendet werden, was das Verfahren vereinfacht.

In einer ersten Ausgestaltung des Verfahrens erfolgt das Manipulieren, indem von mehreren, aus unterschiedlichen Projektoren auf denselben Bildpunkt der Projektionsfläche projizierbaren Pixeln die Intensität desjenigen mit dem höchsten Schärfegradwert unverändert bleibt, während die anderen dieser Pixel dunkel eingestellt werden. Diese exklusiv-alternative Projektion der Pixel stellt eine einfache, schnell durchführbare Ausgestaltung dar.

Eine zweite, alternative Ausgestaltung sieht vor, dass das Manipulieren erfolgt, indem die Intensitäten mehrerer aus unterschiedlichen Projektoren auf denselben Bildpunkt der Projektionsfläche projizierbarer Pixel anhand ihrer Schärfegradwerte gewichtet skaliert werden. Diese gewichtete Projektion ermöglicht eine bessere Darstellung ohne optische Artefakte, aber mit mehr Lichtintensität. Dies ist insbesondere für Projektionsflächen mit geringer diffuser Reflektivität von Vorteil.

Für eine bevorzugte Ausführungsform ist vorgesehen, dass die Schärfegradwerte der Pixel in einem Kalibrierdurchgang ermittelt werden, wozu nacheinander mittels jedes Projektors ein Kalibriermuster projiziert und die von der Projektionsfläche reflektierten Projektionen mittels einer Kamera in betreffende Kalibrierbilder aufgenommen werden. Mit diesem Verfahren können mit geringem Aufwand relative Schärfegradwerte zwischen den Pixeln der Projektoren ermittelt werden, die für die Intensitätsmanipulation ausreichen. Absolute Schärfegradwerte sind nicht erforderlich.

Besonders bevorzugt ist eine Ausgestaltung, in welcher in einem der aufgenommen Kalibrierbilder eine Intensität eines Pixels ein erstes Mal normiert wird, indem sie zu der Intensität des korrespondierenden Pixels in dem projizierten Kalibriermuster ins Verhältnis gesetzt wird. Auf diese Weise wird eine genauere, da konsistente Ermittlung der Schärfegradwerte ermöglicht. Da die projizierte Intensitäten bei der Reflexion werden mit der Oberflächenreflektivität vermischt werden, sind die so ermittelten Schärfegradwerte unabhängig von der Oberflächenreflexion der Projektionsfläche. Die normierten Intensitäten sind durch diesen Verfahrensschritt zudem unabhängig vom Formfaktor des Projektors, der durch dessen Ausrichtung zur und Entfernung von der Projektionsfläche bestimmt wird. Ein derart erstmalig normiertes Kalibrierbild aus Verhältnisfaktoren kann als eigenständige Intensitätsverteilung zur Ermittlung der Schärfegradwerte verwendet werden. Die Verteilung der Verhältnisfaktoren verhält sich wie die Intensitätsverteilung im Kamerabild.

Vorteilhafterweise werden mehrere erstmalig normierte Intensitäten eines Kalibrierbildes untereinander ein zweites Mal normiert. Damit können genauere Schärfegradwerte erreicht werden, indem Maxima der in den erstmalig normierten Intensitäten vorliegenden Gauß- und dazu ähnlichen Verteilungen auf einen Wert von 1,0 angehoben werden, wobei die übrigen Intensitäten mit denselben jeweiligen Faktoren skaliert werden. So können Unzulänglichkeiten von Projektor und Kamera wie begrenzte Helligkeit, Dynamik und Antwortfunktion sowie Rauschen verringert werden.

Besonders bevorzugt ist eine Ausführungsform, in welcher ein Schärfegradwert aus normierten Intensitäten eines Kalibrierbildes mittels Bildzerlegung unter Anwendung des momenterhaltenden Prinzips ermittelt wird. Diese Ausführungsform ermöglicht eine hohe Geschwindigkeit und Genauigkeit des Verfahrens. Andere, weniger genaue und langsamere Möglichkeiten umfassen das Ermitteln der Schärfegradwerte anhand der Intensitätsverluste in den normierten Kalibrierbildern, einer Frequenzverschiebung beispielsweise nach Fast-Fourier-Transformation oder diskreter Kosinustranformation, einer Gradientenanalyse mit einem Sobel- oder Laplacefilter oder aus einer statistischen Analyse der Intensitätsverteilung.

Vorteilhafterweise wird die Bildzerlegung innerhalb eines zweidimensionalen Abtastausschnitts des betreffenden Kalibrierbilds durchgeführt. Dies ermöglicht eine schnelle Analyse. Es können dabei mehrere Bildpunkte im selben Kalibrierbild parallel ausgewertet werden.

Eine hohe, einstellbare Genauigkeit des Verfahrens wird erreicht, indem das Kalibriermuster für einen Projektor in mehreren Schritten verschoben wird und nach jedem Schritt ein betreffendes Kalibrierbild aufgenommen wird. Dazu können die Schrittweite und -anzahl vorgegeben werden. Durch eine Schrittweite von einem Pixel kann für jeden Pixel des Kameraraums ein Schärfegradwert ermittelt werden. Eine Alternative stellt beispielsweise eine Interpolation zwischen mit größeren Schrittweiten analysierten Stellen dar. Eine weitere Alternative sieht vor, dass allen Pixeln eines Abtastausschnitts der Schärfegradwert des Zentralpixels zugewiesen wird. Diese Alternativen machen das Verfahren einfach und schnell durchführbar, aber ungenauer.

In einer bevorzugten Ausgestaltung wird als Kalibriermuster ein Gitter aus kreisförmigen Punkten verwendet. Kreisförmige Punkte erlauben aufgrund der Radialsymmetrie eine einfache und schnelle Bestimmung der Schärfegradwerte in mehreren Richtungen gleichzeitig. Alternativ können beispielsweise horizontale und vertikale Streifen als Kalibriermuster verwendet werden, wobei die Schärfegradwerte separat in horizontaler und vertikaler Richtung ermittelt werden. Anschließend können die Schärfegradwerte der beiden Richtungen beispielsweise gemittelt werden, wobei der Mittelwert als gemeinsamer Schärfegradwert weiterverwendet wird. Es könne im gesamten restlichen Verfahren auch horizontale und vertikale Schärfegradwerte separat weiterbehandelt und - verwendet werden, wobei separate Auswahl- beziehungsweise Gewichtungsbedingungen für die Manipulationen angewendet werden.

Vorteilhafterweise wird das Kalibriermuster vor dem Projizieren für jeden Projektor individuell in dessen Perspektive hinsichtlich der Eigenschaften der Projektionsfläche geometrie- und/oder farbkorrigiert wird. Die Geometriekorrektur bewirkt, dass ein Kalibrierbild im in sich einheitlichen Maßstab abgebildet wird und das Kalibriermuster darin genau so zu den Kamerabildachsen orientiert ist wie vorgesehen, insbesondere achsenparallel, was die Analyse erleichtert und beschleunigt. Die Farbkorrektur bewirkt, dass das Kalibriermuster im Kalibrierbild eine vom Formfaktor des betreffenden Projektors und von den Farben beziehungsweise dem Material der Projektionsfläche unabhängige Intensität aufweist, so dass im wesentlichen lediglich die Intensitätsverbreiterungen aufgrund der Defokussierung zur Analyse verbleiben.

In einer vorteilhaften Ausgestaltung wird beim farblichen Manipulieren eine wechselseitige Beleuchtung von verschiedenen Projektionsflächensegmenten anhand von mit den Projektionsflächensegmenten korrespondierenden Formfaktoren kompensiert. Dabei wird das Kompensieren vorzugsweise iterativ durchgeführt, wobei eine auf ein Projektionsflächensegment zu projizierende Intensität anhand einer reflektierten Streuintensitäten bestimmt wird.

Die Erfindung wird im Folgenden anhand von Ausführungsbeispielen erläutert.

Dazu zeigen:

Figur 1   schematisch eine erfindungsgemäße Vorrichtung während der Kalibrierung,

Figur 2   schematisch den Ablauf des Verfahrens,

Figur 3   den Ablauf des Verfahrens in einer erweiterten Ausgestaltung,

Figur 4   schematische Darstellungen der Geometrie- und Farbkorrektur,

Figur 5   eine schematische Darstellung eines Kalibrierdurchgangs zur Ermitt- lung von Schärfegraden,

Figur 6   eine erste Anordnung mit ebener Projektionsfläche,

Figur 7   eine zweite Anordnung mit unregelmäßiger Projektionsfläche,

Figur 8   eine dritte Anordnung mit konvexer Projektionsfläche und einem kombinierten Mehrfachprojektor,

Figur 9   Ergebnisse des Verfahrens bei einer ebenen Projektionsfläche und

Figur 10   eine Anordnung für betrachterpositionabhängige Darstellung mit ver- schiedenen Kamerapositionen während der Kalibrierung.

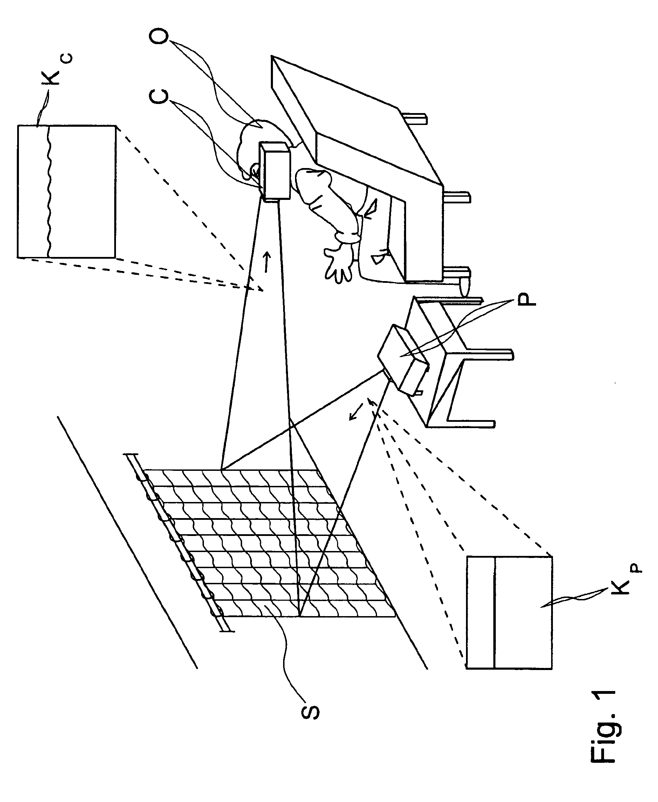

In **Figur 1** ist eine Vorrichtung während des automatischen Kalibriervorganges dargestellt. Der Projektor P in Form eines digitalen LCD-Lichtprojektors, der beispielsweise eine XGA-Auflösung aufweist, ist so angeordnet und fest fokussiert, dass er die Projektionsfläche S beleuchtet. Es können beliebige digitale Projektoren verwendet werden, beispielsweise auch Laserprojektoren. Der Projektor P kann dabei in einer beliebigen Position in Bezug auf die Projektionsfläche S angeordnet sein. Die Projektionsfläche S ist ein gewellter Vorhang vor einer Terassentür, weist also eine komplexe Geometrie auf. Die Projektionsfläche S weist weiterhin eine komplexe Texturierung auf, da sie horizontal unterschiedlich farbige Streifen aufweist. Etwa an der Position der Augen eines Betrachters O ist zur Kalibrierung vorübergehend eine Kamera C beispielsweise in Form einer analogen oder digitalen Videokamera angeordnet, welche die Projektionsfläche S abbildet und die aufgenommenen Bilder digitalisiert. Die Kamera C ist an eine nicht abgebildete Steuereinheit angeschlossen, in welcher die mittels der Kamera C digitalisierten, aufgenommenen Bilder verarbeitbar sind. Der Projektor P ist ebenfalls mit der Steuereinheit verbunden, wobei ein zu projizierendes Bild von der Steuereinheit an den Projektor P übertragbar ist. Die Steuereinheit ist zudem mit einem nicht abgebildeten DVD-Player verbunden, der digitale Bilder Z an die Steuereinheit abgibt, die nach dem Kalibiervorgang auf der Projektionsfläche S darzustellen sind. Anstelle des DVD-Players können alle bildgebenden Quellen wie Videorekorder, Camcorder, Computer verwendet werden. Ein Computer kann hierzu insbesondere Computeranimationen abspielen oder eine Benutzeroberfläche zur Verfügung stellen.

Während des Kalibriervorganges werden in einer Variation des Spalten-Zeilen-kodierten Musterprojektionsverfahren mit Phasenverschiebungen zeitlich gemultiplexte Streifenmuster in einer Vielzahl von projizierten Kalibrierbildem $K_P$ dargestellt und in zugehörigen digitalisierten, aufgenommenen Kalibrierbild $K_C$ erfasst. Anhand der Unterschiede zwischen den projizierten Kalibrierbildern $K_P$ und den zugehörigen digitalisierten, aufgenommenen Kalibrierbildem $K_C$ wird ein Pixelversatzfeld D (engl. pixel displacement map) ermittelt, das jeweils einen Pixel der Betrachterperspektive, also der Kamera, zu einem projizierten Pixel des Projektors zuordnet. Zur Veranschaulichung wird in dem in Figur 1 dargestellten Zeitpunkt mittels des Projektors P ein Kalibrierbild $K_P$ projiziert, welches eine einzelne horizontale Linie enthält. Aufgrund der gewellten Geometrie der Projektionsfläche S erscheint diese Linie aus der Betrachterperspektive und somit in dem digitalisierten, aufgenommenen Kalibrierbild $K_C$ als gewellte Linie. Die derart ermittelte Verzerrung der Linienpixel wird in dem Pixelversatzfeld D gespeichert.

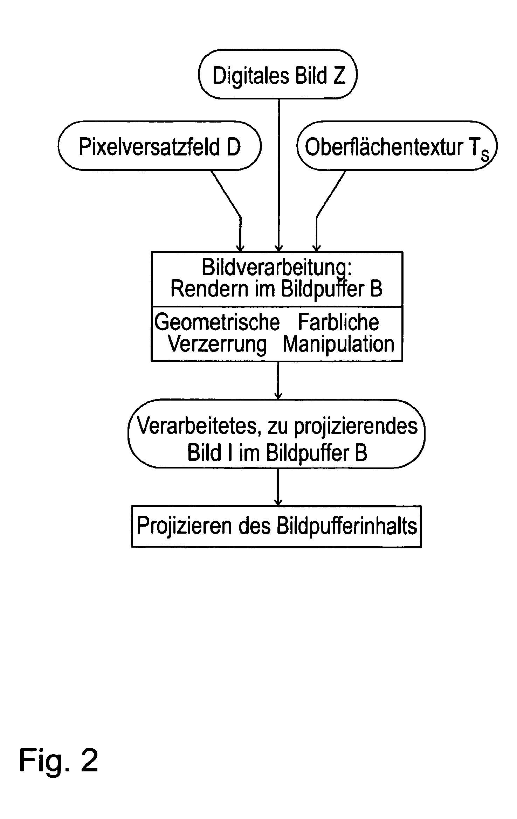

**Figur 2** beschreibt schematisch den Ablauf des Darstellungsverfahrens in einer Anordnung, die beispielsweise mit der in Figur 1 beschriebenen übereinstimmt. In einem Bildverarbeitungsschritt wird innerhalb einer Steuereinheit ein darzustellendes, digitales Bild Z anhand eines zweidimensionalen Pixelversatzfeldes D und anhand einer Oberflächentextur $T_S$ der Projektionsfläche S geometrisch verzerrt und farblich manipuliert. Das Pixelversatzfeld D und die Oberflächentextur $T_S$ stammen aus einem zuvor durchgeführten Kalibrierdurchgang. Die geometrische Verzerrung anhand des Pixelversatzfeldes D erfolgt derart, dass die Pixel des digitalen Bildes Z so versetzt werden, dass aus der Betrachterbeziehungsweise Kameraperspektive das digitale Bild Z auf eine virtuelle, ebene Fläche projiziert erscheint. Vorzugsweise wird die geometrische Verzerrung mittels eines Pixelshaders durchgeführt, da auf diese Weise die Bildverarbeitung in Echtzeit erfolgen kann. Die farbliche Manipulation anhand der Oberflächentextur $T_S$ der Projektionsfläche S erfolgt derart, dass die Farben und/oder Muster der Projektionsfläche S möglichst weitgehend neutralisiert erscheinen, so dass das digitale Bild Z auf eine weiße Fläche projiziert erscheint. Während des Verarbeitungsschrittes wird das verarbeitete Bild in einen Bildpuffer B gerendert. Aus diesem wird es anschließend mittels des Projektors P projiziert.

Da in dem Verarbeitungsschritt sowohl die geometrische Verzerrung als auch die farbliche Manipulation durchgeführt werden, erscheint das digitale Bild Z aus der Betrachter- beziehungsweise Kameraperspektive auf eine virtuelle, ebene, weiße Fläche projiziert. Der Betrachter nimmt also kaum Verzerrungen aufgrund einer nichtebenen Geometrie der Projektionsfläche S und kaum Verfärbungen aufgrund nicht-weißer Farbe und/oder Textur der Projektionsfläche S wahr. Es ist auch möglich, in dem Verfahren ausschließlich die geometrische Verzerrung oder alternativ ausschließlich die farbliche Manipulation durchzuführen. Beispielsweise ist, falls die Projektionsfläche weiß und uneben ist, lediglich die geometrische Verzerrung erforderlich. Auch für schwache Färbungen, beispielsweise in hellen Pastelltönen, ist die alleinige geometrische Verzerrung ausreichend. Ist hingegen die Projektionsfläche eben, jedoch mit nicht-weißer Farbe und/oder Texturen versehen, so ist nur die farbliche Manipulation erforderlich.

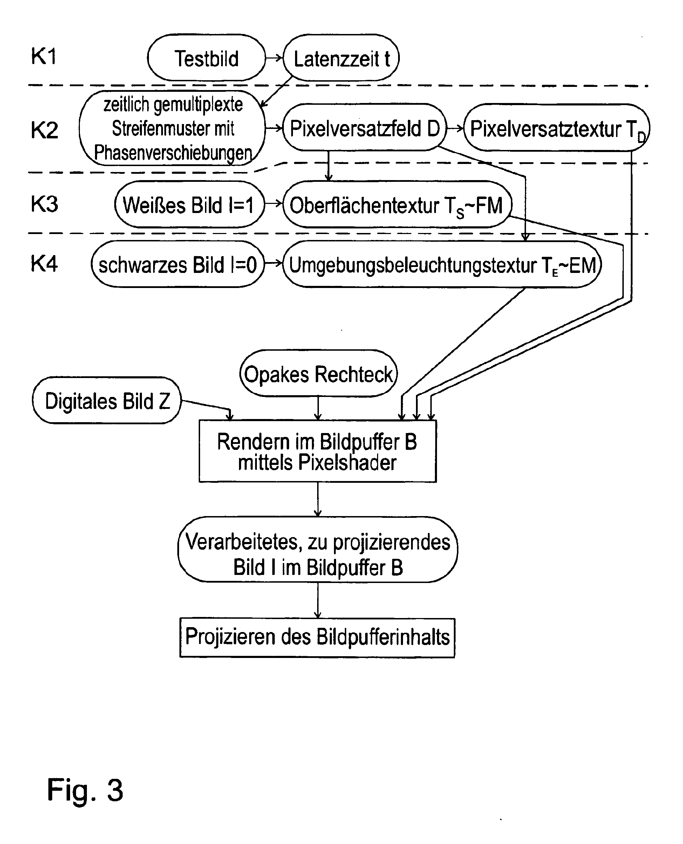

In **Figur 3** sind Schritte eines komplexeren Darstellungsverfahrens zu einer Vorrichtung, beispielsweise gemäß Figur 1, einschließlich einer automatischen Kalibrierung, schematisch dargestellt. Zuerst wird zweckmäßigerweise der Kalibrierdurchgang durchgeführt. Ein Betrachter O muss dazu lediglich eine Kamera C in der vorgesehenen Betrachterposition anbringen und während der Kalibrierung in dieser Position belassen. Soll die Projektionsfläche nur teilweise beleuchtet werden, so kann der Betrachter O durch eine Maske in einem mittels der Kamera C in der Betrachterposition aufgenommenen Bild der Projektionsfläche S eine Begrenzung einer virtuellen Projektionsfläche festlegen, innerhalb derer die Projektion erfolgen soll. Alle Pixel außerhalb der Begrenzung werden nach dem Digitalisieren aller nachfolgenden Aufnahmen auf schwarz gesetzt, so dass während der Kalibrierung keine Projektion in diese Bereiche erkannt wird. Als Folge wird auch in den regulären Verfahrensschritten keine Projektion in diese Bereiche erfolgen. Wird keine Begrenzung beziehungsweise Maske festgelegt, so wird das Sichtfeld der Kamera C automatisch als Begrenzung verwendet. Anschließend kann der Betrachter die automatische Kalibrierung auslösen. Deren Verlauf wird im Folgenden zunächst beschrieben. Alle Aufnahmen der Kamera C werden dabei automatisch vorentzerrt, um eine radiale Linsenverzeichnung der Kamera C zu kompensieren.

In einem ersten Kalibrierschritt K1 wird mittels des Projektors P ein Testbild auf die Projektionsfläche S projiziert und mit der Kamera C wiederholt Bilder von der Projektionsfläche aufgenommen, bis das Testbild in den aufgenommenen Bildern identifiziert wird. Die Zeitspanne von der Projektion bis zur Identifikation wird als Latenzzeit t gemessen und in allen folgenden Kalibrierschritten bei der Aufnahme von Bildern berücksichtigt. Zur Erhöhung der Genauigkeit können auch mehrere Zeitmessungen anhand mehrerer Testbilder erfolgen. Ein Testbild ist zweckmäßigerweise so aufgebaut, dass es auch bei Vorhandensein von unregelmäßigen Strukturen, starken Verzerrungen und großen Farbunterschieden identifizierbar ist. Es ist sinnvoll, die Kalibrierung unter Ausschluss einer Umgebungsbeleuchtung unter Verdunkelung durchzuführen, um eine sichere Identifikation des Testbilds oder der Testbilder zu ermöglichen. In einem späteren Kalibrierschritt wird ebenfalls Verdunkelung benötigt, daher ist es zweckmäßig, bereits vor dem Kalibrierdurchgang zu verdunkeln.

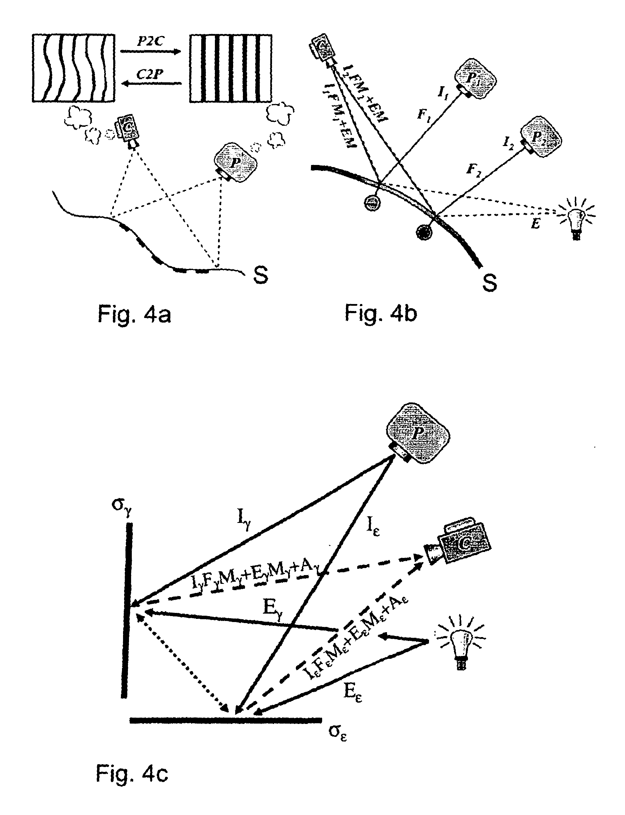

In einem zweiten Kalibrierschritt K2, bildlich erläutert in **Figur 4a,** werden mittels des Projektors P zeitlich gemultiplexte Streifenmuster in einer Variation des Spalten-Zeilen-kodierten Musterprojektionsverfahren mit Phasenverschiebungen in Kalibrierbildern $K_P$ projiziert und mittels der Kamera C in zugehörige Kalibrierbilder $K_C$ aufgenommen und digitalisiert. Anhand der Unterschiede zwischen den projizierten Kalibrierbildern $K_P$ und den zugehörigen digitalisierten, aufgenommenen Kalibrierbildem $K_C$ wird zunächst eine C2P-Zuordnungsabbildung ermittelt, die zu jedem Pixel der Betrachterperspektive, also der Kamera C einen Pixel des Projektors P zuordnet. Aus dieser wird durch Bilden der Umkehrabbildung ein zweidimensionales Pixelversatzfeld D ermittelt, das jeweils einen Pixel der Betrachterperspektive, also der Kamera C, zu einem projizierten Pixel des Projektors P zuordnet. Das Pixelversatzfeld D kann auch als P2C-Zuordnungsabbildung bezeichnet werden. Es hat dieselbe Auflösung wie der Projektor P. Aufgrund unterschiedlicher Auflösungen von Kamera C und Projektor P und aufgrund deren unterschiedlicher Abstände von der Projektionsfläche S stellt das Pixelversatzfeld D keine eins-zu-eins Pixelzuordnung dar. Im Extremfall kann das Pixelversatzfeld D unvollständig sein, falls Teile der Projektionsoberfläche S im Schatten erhabener Strukturen liegen. Dies kann jedoch durch mehrere, aus unterschiedlichen Richtungen projizierende Projektoren vermieden werden. Weiterhin ist es möglich, dass aufgrund der geometrischen Struktur der Projektionsfläche S mehrere verschiedene projizierte Pixel der Streifenmuster auf den gleichen Kamerapixel abgebildet werden. Daher werden Mittelwerte der geometrischen Versätze berechnet und in dem Pixelversatzfeld D gespeichert. Auf diese Weise wird eine Genauigkeit unterhalb eines Pixels erreicht. Das Pixelversatzfeld D erlaubt, jeden Pixel des Projektors P aus dessen Perspektive in die Betrachterperspektive der Kamera C abzubilden. Dies ergibt eine unverzerrte Perspektive, ohne dass die dreidimensionale Form der Projektionsfläche S bekannt sein muss. Das Pixelversatzfeld D wird, vorzugsweise mittels eines P-Puffers, in eine Pixelversatztextur $T_D$ konvertiert, die im weiteren Verlauf des Verfahrens für eine automatische Verzerrung eines Bildes in die unverzerrte Perspektive als Parametertextur eines Pixelshaders verwendbar ist. In der Pixelversatztextur $T_D$ sind anschließend Verweise von jedem Pixel des Projektors P zu einem zugehörigen Pixel des digitalen Bildes Z und zu einem zugehörigen Pixel der Kamera C gespeichert. Beispielsweise sind die Verweise zu den Pixeln des digitalen Bildes Z in Form ihrer horizontalen und vertikalen Koordinaten in den Kanälen Rot und Grün und die Verweise zu den Pixeln der Kamera C in Form ihrer horizontalen und vertikalen Koordinaten in den Kanälen Blau und Alphawert gespeichert.

Mittels des Pixelshaders ist in späteren Verfahrensschritten mit der als Parametertextur verwendeten Pixelversatztextur $T_D$ die Bildverzerrung (engl. warping) über ein sogenanntes "pseudo pixel displacement mapping" in Echtzeit möglich. Dem Pixelshader wird dazu in einem solchen späteren Verfahrensschritt als weitere Parametertextur ein jeweils zu verzerrendes Bild Z in Form einer Textur übergeben. Um das Rendern auszulösen, wird beispielsweise ein einzelnes zweidimensionales Rechteck in einen mit dem Pixelshader verbundenen Bildpuffer B geschrieben. Das Rendern schließt das Rastern jedes Projektorpixels in den Bildpuffer B durch den Pixelshader ein. Die Farben der eingehenden Pixel werden durch neue Farben überschrieben, die sich aus den korrespondierenden Pixeln des zu jeweils verzerrenden Bildes Z ergeben. Diese Pixel werden durch den entsprechend programmierten Pixelshader automatisch anhand der in der Pixelversatztextur $T_D$ enthaltenen Koordinaten zu den betreffenden Projektorkoordinaten aus dem digitalen Bild Z ermittelt. Der Effekt ist eine spezifische Verschiebung von Pixeln aus der Projektorperspektive des jeweils zu verzerrenden Bildes an eine neue Position innerhalb des Bildpuffers B, so dass die Pixel nach einem Projizieren aus der Perspektive der Kamera C korrekt wahrnehmbar sind. Diese Verzerrung erfordert keine weiteren geometrischen Informationen über die Projektionsfläche S.

Wenn Licht auf eine Oberfläche trifft, wird nur ein Teil seiner ursprünglichen Intensität und Farbe reflektiert, wohingegen der Rest absorbiert wird. Bei Lambertschen Oberflächen, die vollständig diffus reflektieren, hängt die Stärke und Farbe des reflektierten Lichts von diversen Parametern ab, wie der Materialfarbe M einer Oberflächenstelle, einer zu projizierenden Lichtintensität I einer Spektralkomponente einer Lichtquelle, also eines Projektors P, und der Entfernung und dem Einfallswinkel bezüglich der Oberfläche, die zusammen den sogenannten Formfaktor F darstellen. Bei perfekt diffusen Oberflächen beschreibt das Lambertsche Gesetz die Intensität diffus reflektierten Lichtes R für jede spektrale Komponente: $R=IFM$, $F=\cos(\alpha)/r^2$. Außer dem Licht eines Videoprojektors unterliegt denselben Vorgängen eine Umgebungsbeleuchtung E, die sich unter der Annahme additiver Farbmischung zur Gesamtintensität einer Spektralkomponente des reflektierten Lichtes zusammensetzen als: $R=EM+IFM$. **Figur 4b** erläutert diesen Zusammenhang grafisch.

Durch Projektion eines entsprechenden Bildes in je nach Pixel zu projizierender Lichtintensität I kann die Zusammensetzung neutralisiert werden, was im Sinne der Erfindung als Farbkorrektur oder Farbmanipulation bezeichnet wird, so dass ein visueller Eindruck entsprechend der reflektierten Intensität R in Form eines gewünschten Bildes Z in dessen ursprünglichen Farben entsteht. Dazu wird die Gleichung für I gelöst: $I=(R-EM)/FM$. Die Produkte EM und FM sind mittels des Projektors P und der Kamera C ermittelbar. Eine zu dem Produkt FM proportionale Größe wird unter abgedunkelter Umgebungsbeleuchtung $E=0$ ermittelt, indem ein Bild $I=1$ mit höchster Lichtintensität des Projektors P projiziert und mittels der Kamera C aufgenommen wird. Eine zu dem Produkt EM proportionale Größe wird mit der vorgesehenen Umgebungsbeleuchtung E und schwarzem Projektorbild $I=0$ aufgenommen. Als reflektierte Intensität R werden die Intensitäten des jeweils dazustellenden digitalen Bildes Z nach Farbkanälen separiert verwendet. Dazu wird vorausgesetzt, dass Projektor P und Kamera C hinsichtlich Farbe und Intensität angepasst sind und dass eine automatische Helligkeitskontrolle, ein automatischer Fokus und ein automatischer Weißabgleich der Kamera C ausgeschaltet sind. Die benötigten Parameter sind mit diesen einfachen Annahmen ohne komplizierte Messungen und ohne zusätzliche Geräte ermittelbar. Um eine korrekte Berechnung ohne Verzerrung durch die geometrische Struktur der Projektionsfläche S zu erreichen, werden die aufgenommenen Größen EM und FM vor ihrer weiteren Verwendung mittels des Pixelversatzfeldes D beziehungsweise der Pixelversatztextur $T_D$ in die Projektorperspektive verzerrt.

In einem dritten Kalibrierschritt K3a wird zum Ermitteln der für eine solche Farbkorrektur erforderlichen Größen mittels des Projektors P ein weißes Kalibrierbild $K_P$ mit höchster verfügbarer Helligkeit projiziert und mittels der Kamera C ein dazugehöriges Kalibrierbild $K_C$ aufgenommen und anhand des bereits ermittelten Pixelversatzfeldes D und/oder anhand der Pixelversatztextur $T_D$ der Geometrie der Projektionsfläche S gemäß verzerrt und als Parametertextur verwendbare Oberflächentextur $T_S$ der Projektionsfläche S gespeichert, die die Größe FM repräsentiert. In einem vierten Kalibrierschritt K3b wird unter einer vorgesehenen Umgebungsbeleuchtung mittels des Projektors P ein schwarzes Kalibrierbild $K_P$ projiziert, aufgenommen, digitalisiert, anhand des bereits ermittelten Pixelversatzfeldes D und/oder anhand der Pixelversatztextur $T_D$ der Geometrie der Projektionsfläche S gemäß verzerrt und als Umgebungsbeleuchtungstextur $T_E$ gespeichert, die die Größe EM repräsentiert.

Damit ist die automatische Kalibrierung beendet. Die Kamera C kann entfernt werden, sie wird nicht mehr benötigt, soweit die geometrischen und Beleuchtungs-Verhältnisse konstant bleiben. Im Falle der XGA-Auflösung von 1024x768 Pixeln und einer PAL-Kameraauflösung von 720x576 Pixeln sowie einer maximalen Latenzzeit t der Kamera von 80 ms und einer durchschnittlichen Bildverarbeitungsdauer von 150 ms dauert die automatische Kalibrierung etwa 28 s. Interaktionen mit dem Betrachter sind nicht erforderlich.

Die Darstellung erfolgt nach der Kalibrierung in zwei Schritten S 1 und S2, die in dieser Reihenfolge beliebig wiederholt werden können, wobei ein statisches digitales Bild Z oder eine fortlaufende Folge von digitalen Bildern Z verwendet werden können. Da die Echtzeitbildverarbeitung möglich ist, kann es sich beispielsweise um einen Film oder eine Animation handeln.

In Schritt S1 werden dem Pixelshader zunächst die erforderlichen Parametertexturen übergeben. Es handelt sich um die Pixelversatztextur $T_D$, die Oberflächentextur $T_S$, die Umgebungsbeleuchtungstextur $T_E$ und das digitale Bild Z in Form einer Textur. Durch Schreiben eines weißen Rechtecks in den Bildpuffer B wird für jeden Farbkanal ein separater Rendervorgang ausgelöst. Während des Renderns wird das digitale Bild Z anhand der Pixelversatztextur $T_D$ in der oben zur Kalibrierung beschriebenen Weise durch "pixel displacement mapping" geometrisch verzerrt (engl. warped). Außerdem werden die versetzten Pixel anhand der oben beschriebenen Gleichungen durch den Pixelshader farbkorrigiert beziehungsweise farblich manipuliert. Mittels des Pixelshaders können dabei manuell durch den Betrachter O vorgegebene Farb- oder Helligkeitswerte, insbesondere für eine Gammakorrektur, feineingestellt werden. Außerdem sind mittels entsprechender Programmierung des Pixelshaders extreme Intensitätsverhältnisse vermeidbar, um sichtbare Artefakte zu vermeiden.

Das gerenderte Bild befindet sich anschließend als zu projizierendes Bild I im Bildpuffer B und wird in Schritt S2 mittels des Projektors P auf die Projektionsfläche S projiziert.

Durch die Verwendung mehrerer Projektoren $P_i$ kann einerseits die Darstellungsqualität verbessert werden, insbesondere bei farbiger und/oder texturierter Projektionsfläche S. Die Projektoren $P_i$ können sich hinsichtlich ihrer maximalen Lichtintensität ergänzen und/oder Schattenbereiche jeweils eines oder mehrerer anderer Projektoren $P_i$ beleuchten. Dabei können sich die beleuchteten Bereiche der Projektoren $P_i$ überlappen oder vollständig unabhängig voneinander jeweils einen Teil der Projektionsfläche S beleuchten. Durch Kachelung der projizierten Bilder I kann eine Auflösung erzielt werden, die ein einzelner Projektor P nicht zu erbringen vermag. Der Aufwand zur automatischen Kalibrierung wird für den Betrachter durch mehrere Projektoren $P_i$ nicht erhöht. Die Dauer der Kalibrierung nimmt im wesentlichen linear mit der Anzahl der Projektoren $P_i$ zu. Während der Kalibrierung wird jeweils ein Pixelversatzfeld $D_i$, daraus eine Pixelversatztextur $T_{Di}$ und zudem eine Oberflächentextur $T_{Si}$ für jeden Projektor ermittelt. Auf diese Weise sind Pixel aus der Betrachter- beziehungsweise Kameraperspektive auf die Perspektive jedes Projektors $P_i$ so abbildbar, dass sie auf exakt auf dieselbe Stelle auf der Projektionsfläche projiziert werden. Für N Projektoren $P_i$ addieren sich die einzelnen Lichtintensitäten an einer Oberflächenstelle in einer Spektrumskomponente zur gesamten reflektierten Intensität $R=EM+I_1F_1M+...+I_NF_NM$. Unter der Annahme, dass die Projektoren $P_i$ eine identische Intensität abstrahlen, kann die jeweils zu projizierende Intensität $I_i$ eines Projektors $P_i$ berechnet werden aus:

$I_i=(R-EM)/(F_1M+...+F_NM)$, da unter dieser Annahme gilt:

$R=EM+I_i(F_1M+...+F_NM)$. Das entspricht einem einzelnen, virtuellen, starken Projektor P. Obwohl jeder Projektor $P_i$

dieselbe Intensität abstrahlt, bewirken unterschiedliche Formfaktoren $F_i$ unterschiedliche auftreffende Intensitätsteile. Diese Teile werden auf der Projektionsfläche S additiv gemischt und ergeben die reflektierte Intensität:

$$R=EM+I_iF_1M+...+I_iF_NM=EM+(R-EM)/(F_1M+...+F_NM)(F_1M+...+F_NM).$$

Wie im Falle eines einzelnen Projektors P wird das zu projizierende Bild I in Echtzeit mittels eines oder mehrerer Pixelshadern berechnet, welchen die Parametertexturen zu den Größen EM, $F_1M$, ..., $F_NM$ nach projektorabhängigem Verzerren mittels des zu dem betreffenden Projektor gehörenden Pixelversatzfeldes $D_i$ beziehungsweise der betreffenden Pixelversatztextur $T_{Di}$ als Umgebungsbeleuchtungstextur $T_E$ beziehungsweise als Oberflächentexturen $T_{Si}$ übergeben werden. Die Größen $F_iM$ können auf zwei Weisen ermittelt werden. Entweder durch sequentielles Projizieren und Aufnehmen eines Bildes $I_i=1$ höchster Intensität für jeden einzelnen der Projektoren $P_i$ nacheinander oder durch Aufnahme eines projizierten Bildes I, das proportional zu $F_1M+...+F_NM$ ist, indem dazu mittels aller Projektoren $P_i$ gleichzeitig Bilder $I_i=1$ höchster Intensität projiziert werden. Die zweite Vorgehensweise ist zwar kompakter, kann jedoch zu einer Übersteuerung der Kamera C führen. Schattenregionen einzelner Projektoren $P_i$ sind dabei in den Formfaktorgrößen eingeschlossen und werden automatisch als Nebeneffekt entfernt. Dazu muss jeder auszuleuchtende Bereich der Projektionsfläche S durch mindestens einen Projektor $P_i$ beleuchtbar sein. Gleichmäßige Übergänge zwischen den Projektionen mehrerer Projektoren $P_i$ sind mit üblichen Cross-Fading-Techniken möglich.

Anstelle der Verwendung eines oder mehrerer Pixelshader ist stets auch die Durchführung mittels einer oder mehrerer Hauptprozessoren möglich.

Um eine hohe Darstellungstreue zu erreichen, werden der oder die Projektoren $P_i$ und die Kamera C zweckmäßigerweise vor der automatischen Kalibrierung auf Farbe und Intensität abgeglichen. So können Übersteuerungen vermieden werden.

Gemäß **Figur 4c** wird ein Lichtstrahl einer von einem Projektor P auf ein Projektionsflächensegment $\sigma_\gamma$ projizierten Intensität $I\gamma$ in dem Projektionsflächensegment $\sigma_\gamma$ diffus reflektiert, wodurch ein Anteil der projizierten Intensität $I_\gamma$ auf ein anderes Projektionsflächensegment $\sigma_\varepsilon$ abgestrahlt wird. Von dem Projektionsflächensegment $\sigma_\varepsilon$ gelangt dadurch eine reflektierte Streuintensität $A_\varepsilon$ zusätzlich zu der auf das Projektionsflächensegment $\sigma_\varepsilon$ projizierten, mit dem Formfaktor $F_\varepsilon$ und der Materialfarbe $M_\varepsilon$ multiplizierten Intensität $I_\varepsilon$ und dem mit der Materialfarbe $M_\varepsilon$ multiplizierten Umgebungsbeleuchtung $E_\varepsilon$ in die Kamera C beziehungsweise in die Augen eines Betrachters O. Ein entsprechender Vorgang findet wechselseitig zwischen allen möglichen beleuchteten Projektionsflächensegmenten $\sigma_\gamma$ ($\gamma=1..\mu$) statt und beeinflusst die Darstellungsqualität negativ.

Um die wechselseitig indirekte Beleuchtung zu kompensieren, wird in einer vorteilhaften Ausführungsform die auf ein Projektionsflächensegment $\sigma_\gamma$ zu projizierende Intensität $I\gamma$ ermittelt durch segment- und farbkanalweises Lösen

der Gleichung $I_\gamma = \frac{1}{F_\gamma M_\gamma}\left(R_\gamma - E_\gamma M_\gamma - \sum_{h=1, h\neq\gamma}^{h} A_\gamma^h\right)$, vorzugsweise mittels numerischer, iterativer Näherung, wobei die reflektierten Streuintensitäten $A_\gamma^h$ in h-ter Streuordnung rekursiv ermittelt werden gemäß:

$$A_\gamma^h = \sum_{\varepsilon, \varepsilon\neq\gamma}^{\mu} S_\varepsilon^{h-1} F_{\varepsilon\gamma} M_\gamma \quad \text{mit} \quad A_\gamma^1 = \sum_{\varepsilon, \varepsilon\neq\gamma}^{M}\left(I_\varepsilon F_\varepsilon M_\varepsilon + E_\varepsilon M_\varepsilon\right)F_{\varepsilon\gamma} M_\gamma,$$

wobei die $F_{\gamma\varepsilon}$ wechselseitige Formfaktoren der gegenseitigen Beleuchtung von zwei Projektionsflächensegmenten $\sigma_\gamma$, $\sigma_\varepsilon$ sind.

Ausgangspunkt jedes Iterationsschrittes ist dabei jeweils eine direkte Beleuchtung in Form einer zu projizierenden Intensität $I\gamma$. Der Ausgangspunkt der ersten Iteration wird in der oben beschriebenen Weise für alle Projektionsflächensegmente $\sigma_\gamma$ einheitlich gemäß $I_\gamma=(R_\gamma-E_\gamma M_\gamma)/F_\gamma M_\gamma$ analytisch berechnet. In jedem Iterationsschritt werden mittels der zuvor genannten Beziehungen reflektierte Streuintensitäten $A_\gamma^h$ anhand des jeweiligen Ausgangspunkts berechnet und damit eine weitere zu projizierende Intensität $I_\gamma$ als Ausgangspunkt für den nächsten Iterationsschritt ermittelt. Die Iteration wird beendet, wenn die ermittelte zu projizierende Intensität $I_\gamma$ ein vorgebbares Konvergenzkriterium erfüllt. Die Berechnungen der obigen Gleichungen werden vorzugsweise mittels mindestens eines Pixelshaders durchgeführt, dem die wechselseitigen Formfaktoren $F_{\gamma\varepsilon}$ und als Parametertexturen übergeben werden. Die Iteration wird über mehrere Darstellungsdurchgänge hinweg durchgeführt, wobei ein Iterationsschritt während des Renderns jeweils eines Darstellungsdurchgangs erfolgt. Beispielsweise wird die Projektionsfläche S in Projektionsflächensegmente $\sigma_\gamma$ der Größe 128x128 Pixel unterteilt. Alle Parametertexturen werden entsprechend aus der Projektorauflösung auf die Segmentauflösung heruntergerechnet. Anschließend wird die iterative Anpassung der zu projizierenden Intensitäten aus der Segmentauflösung auf die Projektorauflösung hochgerechnet.

Generell haben Projektoren den Vorteil, aktiv Kanten auf einer Oberfläche erzeugen zu können, zumal sie meist in Dunkelheit verwendet werden. Dadurch ist die Projektion kontrastreich und enthält gut identifizierbare Kanten. Auch kann die Form der zu projizierenden Objekte so gewählt werden, dass die Schärfegradbestimmung genau ist. Ein Kamerabild der Projektionsfläche und damit der projizierten Objekte ist zur Schärfemessung gut geeignet. Die zum Stand der Technik erläuterten Autofokusmechanismen bestimmen einen einzelnen Schärfegrad für ein gesamtes Kamerabild. Für das erfindungsgemäße Verfahren sind jedoch pixelweise Schärfegradwerte erforderlich. Das bekannte Verfahren mit strukturiertem Licht kann dahingehend verbessert werden. Eine einfache Lösung ist, die vertikalen und horizontalen Balken, die ein Projektor als Kalibriermuster projiziert, entlang der Bildachsen schrittweise zu bewegen. Nach jedem Schritt wird das mit der Kamera aufgenommene Kalibrierbild ausgewertet, und ein Schärfegradwert kann für jeden Kamerapixel bestimmt werden, den der Balken gerade trifft. Da aber die Projektionsflächen nicht zwingend eben sind, und die Projektoren und Kameras keine vorgegebene Position zu sich und der Fläche einnehmen, ist es wahrscheinlich, dass die Balken im Kalibrierbild gekrümmt sind, und dass sie nicht parallel zu den Bildkoordinatenachsen der Kamera liegen. Die zwei Intensitätsverteilungen, die sich aus einer vertikalen und einer horizontalen Suchrichtung des diskreten Kalibrierbildes ergeben, sind daher unterschiedlich. Im schlechtesten Fall, nämlich wenn ein Balken orthogonal zu einer Bildachse liegt, kann gar keine Verteilung bestimmt werden. Eine für Auswertung von Kamerabildern besser geeignete Geometrie ist daher eine kreisförmige Punktfläche. Eine Projektion von Punkten erzeugt auf der Projektionsfläche S punktförmige Reflexionen. Anhand der Abbildung eines Punktes im Kamerabild ist für jede Durchlaufrichtung der Rastergraphik eine zumindest vollständige Intensitätsverteilung bestimmbar. Bei Projektionsflächen S mit geringer diffuser Reflexion kann ein inverses Kalibriermuster verwendet werden, das anstelle von weißen Punkten auf schwarzen Hintergrund schwarze Punkte auf weißen Hintergrund verwendet. In einem solchen Fall wird nach der Aufnahme eines Kalibrierbildes dieses invertiert, bevor es der weiteren Auswertung zugeführt wird.

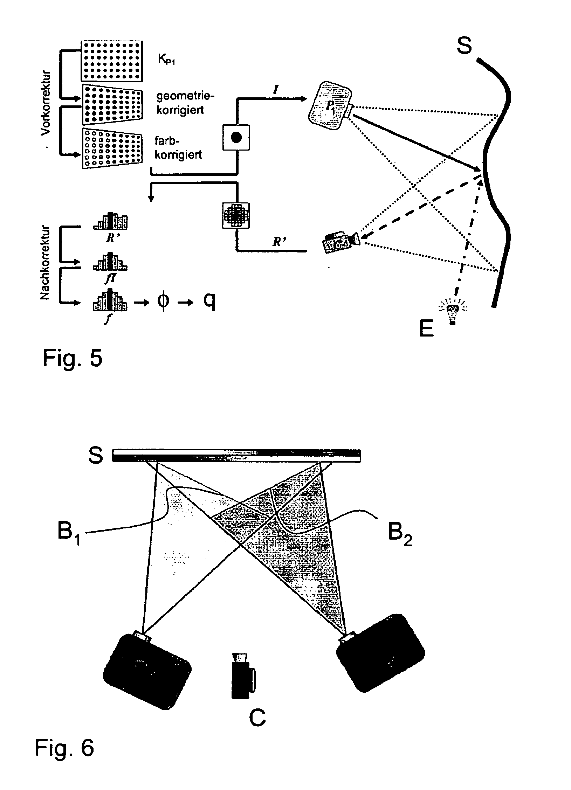

In **Figur 5** wird am Beispiel eines Projektors $P_1$ und einer Kamera C ein Kalibrierdurchgang zum Ermitteln der Schärfegradwerte $\phi_{l,x,y}$ als pixelweises Maß für die Schärfe der Darstellung des Projektors $P_1$ an allen Bildpunkten X seines Projektionsfeldes schematisch erläutert. Ein solcher Kalibrierdurchgang wird nacheinander für jeden der vorhandenen Projektoren $P_i$ durchgeführt. Die anderen Projektoren $P_i$ sind hier nicht abgebildet. Der Kalibrierdurchgang besteht aus einem Vorkorrekturschritt, einem Projektions- und Aufnahmeschritt und einem Nachkorrekturschritt. Die Präpositionen vor und nach beziehen sich dabei auf den Schritt des Projizierens eines Kalibriermusters $K_{P1}$ auf die Projektionsfläche S mit anschließendem Aufnehmen der dort reflektierten Projektion in ein Kalibrierbild $K_{C1}$ mittels der Kamera C. Zur pixelweisen Bestimmung der Schärfegradwerte $\phi_{l,x,y}$ wird beispielsweise als Kalibriermuster $K_{P1}$ ein Gitter von Punkten verwendet, das in der Projektion schrittweise parallel zu den Bildachsen weiterbewegt und daraufhin aufgenommen wird. Es liegen dann mehrere Kalibrierbilder $K_{C1}$ vor, die jeweils das projizierte Punktegitter mit unterschiedlichen Positionen enthalten.

Die Vorkorrektur umfasst Korrekturschritte, die vor der Projektion des Kalibriermusters $K_{P1}$ durchgeführt werden. Damit die projizierten Punkte überall im aufgenommenen Kalibrierbild $K_{C1}$ gleich groß sind, wird die zuvor erläuterte Geometriekorrektur verwendet. Zur Projektion des Punktegitters wird eine Textur erstellt, die im gleichmäßigen Abstand voneinander Punkte enthält. Durch die Geometriekorrektur wird die Textur so verzerrt, dass alle Punkte im Kalibrierbild $K_{P1}$ gleich groß sind. Es ist dabei gleichgültig, welche Position und Ausrichtung der Projektor $P_1$ zu anderen und zur Projektionsfläche Seinnimmt. Die willkürliche Position der Kamera C führt zwar zu unterschiedlich großen Punkten auf der Projektionsfläche. Dennoch wird auf eine Stelle der Projektionsfläche S von jedem Projektor $P_i$ einer Anordnung die gleiche Punkteverteilung projiziert, sofern sie gleich fokussiert wären. Ein anderer Vorteil ist, dass das Punktegitter im Kalibrierbild $K_{P1}$ parallel zu den Kamerabildachsen liegt. Es ist also leicht möglich, die Positionen der einzelnen Punkte zu bestimmen, um deren Intensitätsverteilungen auszuwerten. Die zuvor erläuterte radiometrische Korrektur wird direkt nach der Geometriekorrektur auf die Textur angewendet, die das Punktegitter enthält. Alle projizierten Punkte werden damit so korrigiert, dass sie im Kalibrierbild $K_{C1}$ der Kamera C die gleiche Intensität annehmen, unabhängig vom Formfaktor des Projektors $P_1$ und vom Material der Projektionsfläche S.

Da ein Projektor die Intensität I=(R-EM)/FM abstrahlen muss, damit die Intensität in einem Kamerabild gerade R beträgt, kann I größer als eins sein, wenn FM klein ist. Ein Projektor kann nur 100% maximale Intensität abstrahlen kann. Es muss daher I≤1 sichergestellt werden. Dazu kann ein Faktor $\beta$ mit $\beta<1$ gewählt werden, der auf R angewendet wird, so dass I=((R•$\beta$)-EM)/FM und I≤1 gilt. Die Intensitäten im Kamerabild nehmen genau den Wert $\beta$ an, da alle Punkte im Gitter im Ausgangsbild den Wert I = 1.0 haben. Der Vorteil ist, dass $\beta$ einheitlich für alle I aller Projektoren gewählt werden kann, und damit die Schärfegradwerte verschiedener Projektoren vergleichbar sind, auch wenn sie beispielsweise verschiedene Beleuchtungsstärken oder unterschiedlich hohe Formfaktoren aufweisen.

Die Nachkorrektur korrigiert nach dem Projizieren und Aufnehmen die Intensitätsverteilung im Kalibrierbild $K_{C1}$

hinsichtlich der Farbe beziehungsweise Textur der Projektionsfläche S. Diese Korrektur kann erst nach dem Projektions- und Aufnahmeschritt durchgeführt werden, da die Intensitätsverteilungen erst auf der Projektionsfläche S entstehen. Bei der Korrektur muss jedoch beachtet werden, dass die Intensität $I_1$, die vom Projektor $P_1$ abgestrahlt wurde und die Verteilung auf der Projektionsfläche S entstehen lässt, bereits gemäß $I_{x,y} = (R_{x,y} - EM_{x,y})/FM_x$ für die Farbe beziehungs- weise Textur der Projektionsfläche S korrigiert ist. Eine Korrektur aller Werte einer Intensitätsverteilung im Kalibrierbild $K_{C1}$ ist also nur möglich, wenn die Intensitäten auf die ursprünglichen Intensitäten $I$, die vom Projektor $P_1$ abgestrahlt wurden, zurückgeführt werden. Es kann angenommen werden, dass jeder Intensitätswert der Verteilung durch einen Faktor $f$ der vom Projektor ursprünglich abgestrahlten Intensität $I$ entsteht, also $I_f = I \cdot f$. $I_f$ ist dabei die Intensität, die der Projektor ausstrahlen müsste, um einen spezifischen Wert $R$ der Intensitätsverteilung im Kalibrierbild $K_{C1}$ zu erzeugen.

Aus wievielen Werten die Verteilung eines Punktes im Kalibrierbild $K_{C1}$ besteht und wie hoch der Faktor $f$ eines deren Werte ist, hängt dabei von der Fokussierung ab. Da die ursprünglich abgestrahlte Intensität $I$ bekannt ist, wird der Faktor $f$ in einer ersten Normierung der Intensitätswerte $I_f$ des Kalibrierbilds $K_{C1}$ als $f = I_f/I$ bestimmt werden. Die Faktoren $f$ können auch als erstmalig normierte Intensitäten $f$ bezeichnet werden. Es ergibt sich eine neue Verteilung, bestehend aus allen Faktoren $f$ der Werte der im Kalibrierbild $K_{C1}$ aufgenommenen Intensitätsverteilung. Die Verteilung der Faktoren $f$ verhält sich hinsichtlich Schärfe oder Unschärfe gleich der Verteilung der Intensitäten im Kalibrierbild $K_{C1}$, ist jedoch vollständig korrigiert hinsichtlich der Farbe beziehungsweise Textur der Projektionsfläche S. Es können bei der anschlie- ßenden Analyse genauere Schärfegradwerte $\phi_{I,x,y}$ erreicht werden, indem jedes lokale Maximum der in den erstmalig normierten Intensitäten $f$ vorliegenden Gauß- und dazu ähnlichen Verteilungen auf einen Wert von 1,0 angehoben wird, wobei die übrigen zu dem betreffenden Maximum gehörigen Intensitätswerte beziehungsweise Faktoren $f$ mit demselben Normierungsfaktor skaliert werden, so dass sie in zweimalig normierter Form vorliegen.

Die zweidimensionale Verteilung der normierten Intensitäten wird in Abtastausschnitte unterteilt, in deren Zentrum sich jeweils eine Punkteverteilung befindet. Es kann dazu die Verteilung der erstmalig normierten Intensitäten oder die Verteilung der zweimalig normierten Intensitäten verwendet werden. Die Positionen der Abtastausschnitte sind aus der Geometriekorrektur bekannt. Die Seitenlänge der Abtastausschnitte kann beispielsweise vom Anwender eingestellt werden, wird jedoch vorteilhafterweise automatisch auf den Abstand der Punkte im Gitter eingestellt. Der gesamte Inhalt eines Suchfenster trägt damit nur zu dem Schärfegradwert genau eines Pixels im Kalibrierbild $K_{C1}$ bei, nämlich desjenigen Pixels, der sich im Zentrum des Abtastausschnitts befindet.

Es wird nun auf der Verteilung der normierten Intensitäten in einem Abtastausschnitt eine Bildzerlegung unter Verwendung des momenterhaltenden Prinzips durchgeführt, die die Intensitätswerte des Abtastausschnitts in einen Vordergrund und in einen Hintergrund einordnet. Der Vordergrund beinhaltet Werte hoher, der Hintergrund Werte niedriger Intensität. Da die Größe eines Punktes auf der Projektionsfläche abhängig vom Schärfegrad ist, können die Ergebnisse als Schärfegradwerte verwendet werden. Die Pixelmenge besteht damit letztendlich nur aus einem Vordergrund mit der Durchschnittsintensität $g_w$, und dem Hintergrund mit der Durchschnittsintensität $g_b$. Der Schärfegradwert wird durch den Anteil der Pixel im Vordergrund $p_w$, bestimmt. Der Anteil der Pixel im Hintergrund ist $p_b$, wobei $p_w + p_b = 1$. Da die Positionen der Gitterpunkte aus der Geometriekorrektur bekannt sind, kann um jeden Gitterpunkt ein Abtastausschnitt gelegt werden, so dass mehrere Abtastausschnitte parallel zerlegt werden können.

Die Abtastausschnitte werden entsprechend einer schrittweisen Verschiebung des Kalibriermusters $K_{P1}$ über das betreffende Kalibrierbild $K_{C1}$ verschoben und die Bildzerlegungen für jede Position wiederholt. Es wird so für jeden Pixel der Kameraperspektive ein betreffender Schärfegradwert $\phi_{I,x,y}$ für den Projektor $P_1$ ermittelt.

Nachdem für jeden vorhandenen Projektor $P_i$ ein entsprechender Kalibrierdurchgang durchgeführt wurde, werden für das Zusammensetzen der zu projizierenden Intensitäten $I_i$ aus den ermittelten Schärfegradwerten $\phi_{i,x,y}$ Wichtungsfaktoren $q_{i,x,y}$ für die Manipulation der zu projizierenden Pixelintensitäten $I$ bestimmt. Die Abbildung der Koordinaten x,y aus dem Kamerabildraum in den Projektorbildraum erfolgt mittels der C2P-Abbildung, die für die Geometriekorrektur ermittelt wurde.

Für den Fall einer gewichteten Komposition von Pixeln, die in den obigen Ausführungsbeispielen als zweite Alternative geschildert wurde, werden die Wichtungsfaktoren $q_{i,x,y}$ bestimmt gemäß:

$$q_{i,x,y} = \frac{\phi_{i,x,y}}{\sum_J \phi_{J,x,y}}$$

, wobei die Summierung über alle Projektoren $P_i$ erfolgt. Die

zu projizierenden Intensitäten $I_i$ werden in diesem Fall nach Farbkanälen getrennt pixelweise manipuliert gemäß:

$$I_i = q_{i,x,y} \frac{R - EM}{\sum_J FM_J}$$

Für den Fall einer exklusiven Komposition von Pixeln, die in den obigen Ausführungsbeispielen als erste Alternative geschildert wurde, werden die Wichtungsfaktoren $q_{i,x,y}$ binär bestimmt gemäß:

$$q_{i,x,y} = \begin{cases} 1 \text{ für } \phi_{i,x,y} >= \phi_{j,x,y} \\ 0 \text{ sonst} \end{cases}$$ , wobei die Schärfegradwerte $\phi_{i,x,y}$ der Projektoren $P_i$ paarweise und pixelweise miteinander verglichen werden. Die zu projizierenden Intensitäten $I_i$ werden in diesem Fall nach Farbkanälen getrennt pixelweise manipuliert gemäß:

$$I_i = q_{i,x,y} \frac{R - EM}{FM_i}$$

Um optische Artefakte abzuschwächen, die aus nicht exakt aneinander ausgerichteten oder unterschiedlich großen Pixeln verschiedener Projektoren $P_i$ resultieren, können die Wichtungsfaktoren $q_{i,x,y}$ beziehungsweise die Parametertexturen mittels eines Tiefpassfilters geglättet werden, so dass weiche Kanten und nichtbinäre Wichtungsfaktoren $q_{i,x,y}$ resultieren. Dann muss die Manipulation der Pixelintensitäten $I_i$ wie bei der gewichteten Komposition erfolgen, wobei den exklusiven Wichtungsfaktoren entsprechend normierte Gewichte verwendet werden müssen.

Die gewichtete Komposition ermöglicht eine insgesamt höhere Leuchtstärke der Projektoren $P_i$ und somit eine besser wahrnehmbare Darstellung der digitalen Bilder Z ohne Artefakte an Schärfegrenzen. Sie stellt jedoch einen Kompromiss zwischen Darstellungsschärfe und insgesamter Leuchtstärke dar.

Die pixelweise Multiplikation erfolgt in beiden Varianten, exklusiv und gewichtet, aus Geschwindigkeitsgründen vorteilhafterweise wie oben beschrieben mittels eins Pixelshaders pro Projektor $P_i$, wobei die Wichtungsfaktoren $q_{i,x,y}$ in Form von Parametertexturen übergeben werden. Im Fall der exklusiven Komposition kann alternativ zur Verwendung von Pixelshadern beispielsweise eine Stencilmaske für jeden Projektor berechnet werden, welche schwarz zu projizierende Pixel ausblendet. Im Fall der gewichteten Komposition kann alternativ eine Alphamaske verwendet werden, um die Pixelintensitäten unscharfer Pixel im ermittelten Maß zu verringern.

In **Figur 6** ist eine erste, elementare Anordnung zur Durchführung des erfindungsgemäßen Verfahrens mit Optimierung der Schärfe gezeigt. Sie besteht aus zwei Projektoren $P_1$, $P_2$, die als digitale Lichtprojektoren ausgebildet sind, sowie einer Kamera C und einer Projektionsfläche S. Die Projektoren $P_1$, $P_2$ sind schräg auf die Projektionsfläche S gerichtet, so dass sich ihre Projektionsfelder in einer multifokalen Projektion überlappen. Projektor $P_1$ ist so eingestellt, dass er eine Bildebene $B_1$ fest fokussiert, Projektor $P_2$ ist auf eine Bildebene $B_2$ fest fokussiert. Die Bildebenen $B_1$, $B_2$ fallen aufgrund der schrägen Ausrichtung der Projektoren $P_1$, $P_2$ nicht mit der Ebene der Projektionsfläche S zusammen. Projektor $P_1$ vermag also nur am linken Rand seines Projektionsfeldes, Pixel aus seinem Bildpuffer auf die Projektionsfläche S scharf abzubilden. Komplementär dazu vermag Projektor $P_2$ nur am rechten Rand seines Projektionsfeldes, Pixel aus seinem Bildpuffer auf die Projektionsfläche S scharf abzubilden. Auf jeden Bildpunkt X der Projektionsfläche S wird von Projektor $P_1$ aus ein betreffender erster Pixel und von Projektor $P_2$ aus ein korrespondierender zweiter Pixel simultan projiziert. Die Kamera C ist in diesem Beispiel orthogonal auf die Projektionsfläche S ausgerichtet.

Das erfindungsgemäße Verfahren stellt nun mittels jedes der Projektoren $P_1$, $P_2$ ein jeweiliges digitales Bild auf der Projektionsfläche S dar, wobei in diesem Beispiel beide Bilder identisch sind, da beide Projektionsfelder einander vollständig überlagern. Die digitalen Bilder werden dazu in die betreffenden Bildpuffer der Projektoren $P_1$, $P_2$ kopiert. Dabei werden die Intensitäten der zu projizierenden Pixel anhand von dem jeweiligen Projektor $P_1$, $P_2$ zugeordneten zweidimensionalen Feldern von Schärfegradwerten $\phi_{1,x,y}$, $\phi_{2,x,y}$ mittels eines Pixelshaders in jedem Projektor $P_1$, $P_2$ so manipuliert, dass an jedem Bildpunkt X der Projektionsfläche S ein möglichst scharfer Pixel oder eine möglichst scharfe Überlagerung zweier Pixel abgebildet wird. Jedem Pixelshader wird dazu zu Beginn des Verfahrens eine jeweilige Schärfegradtextur als Parametertextur übergeben. In jeder Schärfegradtextur sind pixelweise aus den Schärfegradwerten $\phi_{1,x,y}$, $\phi_{2,x,y}$ ermittelte Wichtungsfaktoren $q_{1,x,y}$ abgelegt, die der betreffende Pixelshader pixelweise mit jedem Pixel des betreffenden Bildpuffers multipliziert, um so die für jedes digitale Bild zu projizierenden Intensitäten I zu manipulieren.

Am linken Rand der Projektionsfläche S werden nur Pixel des Projektors $P_1$ mit vorgesehener Intensität projiziert, am rechten Rand der Projektionsfläche S hingegen nur Pixel des Projektors $P_2$. Im mittleren Bereich der Projektionsfläche S kann an einem Bildpunkt X je nach Vorgabe entweder als erste Alternative exklusiv der Pixel desjenigen Projektors $P_1$, $P_2$ projiziert werden, der in einem direkten Vergleich den absolut höheren Schärfegradwert aus der korrespondierende Pixel des jeweils anderen Projektors $P_2$, $P_1$ aufweist. In dieser ersten Alternative sind die Schärfegradtexturen also rein binär ausgebildet, die pixelweisen Wichtungsfaktoren $q_{i,x,y}$ nehmen nur Werte von 0 oder 1 an. In einer zweiten Alternative enthalten die Schärfegradtexturen reelle Wichtungsfaktoren $q_{i,x,y}$, wobei sich die Wichtungsfaktoren $q_{1,x,y}$ und $q_{2,x,y}$ aus beiden Projektoren für die simultan aufeinander projizierten Pixel eines jeden Bildpunkts X zu einem Wert von 1,0 ergänzen. Im Ergebnis weist jeder Bildpunkt X der Darstellung einen minimalen Fehler hinsichtlich seiner Schärfe auf.

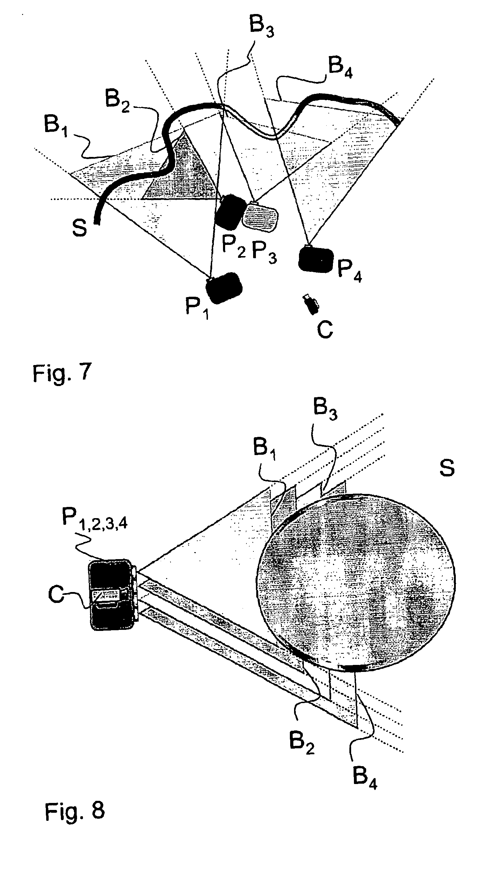

**Figur 7** zeigt eine zweite Anordnung, bestehend aus vier Projektoren $P_i$ (i=1...4), die auf unterschiedliche Bildebenen $B_i$ eingestellt sind, sowie einer Kamera C und einer stark unregelmäßig geformten Projektionsfläche S. Die Projektionsfelder je zweier Projektoren $P_i$ überlappen einander zumindest teilweise mit dem Ergebnis einer multifokalen Projektion. Dabei wird die Projektionsfläche S überall von mindestens einem der Projektoren $P_i$ ausgeleuchtet. Es gibt keine verdeckten Bereiche. Für jeden Projektor Pi verwendet das Darstellungsverfahren ein eigenes zweidimensionales Feld von Schärfegradwerten $\phi_{i,xi,yi}$. Daraus werden analog zum vorherigen Ausführungsbeispiel zunächst vier Schärfegradtexturen ermittelt, eine für jeden Projektor $P_i$. Sie enthalten Wichtungsfaktoren $q_{i,x,y}$. In einer ersten Ausführungsform sind die Wichtungsfaktoren $q_{i,x,y}$ der Schärfegradtexturen rein binär ausgebildet, so dass für einen Bildpunkt X, auf den zwei Pixel aus unterschiedlichen Projektoren projizierbar sind, nach der pixelweisen Multiplikation der Schärfegradtexturen mit den jeweiligen Bildpuffer-Intensitäten ausschließlich derjenige Pixel desjenigen Projektors $P_i$ projiziert wird, der in einem direkten Vergleich am Bildpunkt X den absolut höchsten Schärfegradwert aller infragekommenden Projektoren $P_i$ aufweist.. In einer zweiten Ausführungsform enthalten die Schärfegradtexturen reelle Wichtungsfaktoren $q_{i,x,y}$, wobei sich die Wichtungsfaktoren $q_{i,x,y}$ aus mehreren Projektoren $P_i$ für die simultan aufeinander projizierten Pixel eines jeden Bildpunkts X zu einem Wert von 1,0 ergänzen. Zwar überlappen sich in diesem Ausführungsbeispiel maximal die Projektionsfelder von zwei Projektoren $P_i$, die Durchführung des Verfahrens ist jedoch analog für beliebig viele einander überlappende Projektionsfelder einer entsprechenden Anzahl von Projektoren $P_i$.

In **Figur 8** ist eine dritte Anordnung in der Draufsicht dargestellt, die wie die zweite Anordnung aus Figur 7 vier Projektoren $P_i$ aufweist, die jedoch in einer einzelnen Geräteeinheit zusammen mit einer Kamera C untergebracht sind. Die vier Projektionsfelder sind parallel versetzt ausgerichtet und überlagern sich alle gegenseitig. Die Projektoren $P_i$ sind dabei hinsichtlich ihrer Fokussierung auf unterschiedliche, in diesem Beispiel parallele, äquidistante Bildebenen $B_i$ eingestellt. Die Projektionsfläche S ist die Außenoberfläche eines zylindrischen Körpers. In analoger Weise könnte in einer anderen Ausführungsform die Projektionsfläche S auf der Innenoberfläche eines solchen Körpers oder einer Kuppel liegen.

Durch Verwendung des erfindungsgemäßen Darstellungsverfahrens werden von der Geräteeinheit nach den Kalibrierdurchgängen für Geometrie- und Farbkorrektur sowie für die Ermittlung der Schärfegradwerte und entsprechender Umsetzung in der Manipulation der zu projizierenden Intensitäten jeweils alle von den Projektoren beleuchtbaren Bereiche der Projektionsfläche S automatisch optimal scharf dargestellt. Ein Projektor $P_i$ projiziert ausschließlich diejenigen Pixel mit unveränderter Intensität, die im Bereich seiner Tiefenschärfe um seine Bildebene $B_i$ auf die Projektionsfläche S treffen. Alle anderen Pixel werden vor der Projektion vollständig schwarz gesetzt oder zumindest in der Intensität herabgesetzt. Dabei sind die zu projizierenden digitalen Bilder $Z_i$ in horizontaler Richtung den Abständen der Projektorobjektive entsprechend gegeneinander versetzt.

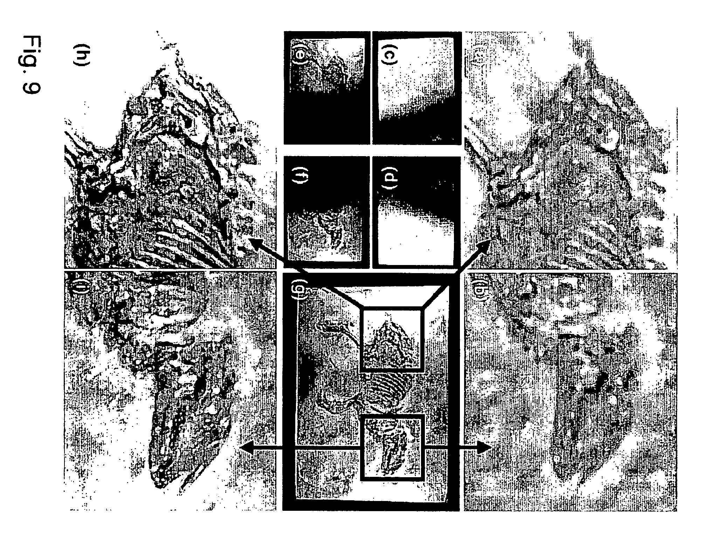

Die **Figuren 9a** und **9b** zeigen unterschiedliche, verschwommene Teile zweier unkorrigierter Projektionen auf eine ebene Projektionsfläche in einer Anordnung gemäß dem Ausführungsbeispiel von Figur 1. Die **Figuren 9c** und **9d** zeigen mittlere Gradienten der pixelweisen Schärfegradwerte $\phi_{1,x,y}$ und $\phi_{2,x,y}$, die mit dem erfindungsgemäßen Verfahren automatisch ermittelt wurden. Der linke Projektor $P_1$ verliert Schärfe von links nach recht, der rechte Projektor $P_2$ zeigt entgegengesetztes Verhalten. Die konstante Tiefenschärfe der Kamera C verstärkt die Unschärfe der Messungen. Diese kameraspezifischen Fokuseffekte sind jedoch für alle Projektoren dieselben. Es können also lediglich relative Schärfegradwerte $\phi_{1,x,y}$ und $\phi_{2,x,y}$ ermittelt werden, die einen Vergleich zwischen den Projektorbeiträgen ermöglichen, nicht jedoch absolute Schärfegradwerte. Kameraspezifische Fokuseffekte spielen jedoch keine Rolle in den erfindungsgemäßen Verfahrensschritten, so dass relative Schärfegradwerte $\phi_{1,x,y}$ und $\phi_{2,x,y}$ für eine scharfe Darstellung vollauf genügen.

In **Figur 9e** und **9f** sind die Beiträge der Projektoren $P_1$, $P_2$ in einer exklusiven Komposition dargestellt. Bis zur mittleren Linie übereinstimmender Schärfegradwerte $\phi_{1,x,y}$ und $\phi_{2,x,y}$ projiziert jeder Projektor $P_1$, $P_2$ den jeweils schärfen Teil der Darstellung. Die vollständige, simultane Darstellung beider Teile zeigt **Figur 9g**. Sie erscheint konsistent und in allen Teilen maximal scharf wie die Ausschnitte in **Figur 9h** und **9i** zeigen.

Die Schärfegradwerte $\phi_{1,x,y}$ und $\phi_{2,x,y}$ sind unabhängig von der Perspektive. Sie sind für jeden Projektor konstant, wenn diese und die Kamera feststehen.

Vier Projektoren können beispielsweise von einem Rechner mit zwei Grafikkarten bedient werden. Zur Steuerung von mehr als vier Projektoren kann beispielsweise Netzwerkkommunikation verwendet werden. Bei Anordnungen mit vielen Projektoren ergibt sich eine hohe Wahrscheinlichkeit, dass die Projektoren, beispielsweise aufgrund unterschiedlicher Modelle, in ihrer Darstellung unterschiedliche Farbräume abdecken. Das Verfahren umfasst dazu zweckmäßigerweise Schritte zur Farbraumanpassung. Der Kalibrierdurchgang kann immens beschleunigt werden, wenn das Gitter der Punktflächen von jedem Projektor nur einmal projiziert und ausgewertet werden wird, anstatt das Punktegitter fortfolgend zu verschieben. Dies gilt insbesondere für geometrisch weniger komplexe Projektionsflächen S, deren Oberfläche sich nicht nur wenig, also niederfrequent, ändert. Hier können die fehlenden Schärfegradwerte zwischen den gemessenen interpoliert werden. Eine Vorverarbeitung der bei der Schärfegradwertmessung verwendeten Kamerabilder kann die Qualität der Messung erhöhen. Eine Vorverarbeitung kann beispielsweise ein Glätten der Kamerabilder umfassen, um hochfrequente Störungen wie Rauschen zu entfernen.

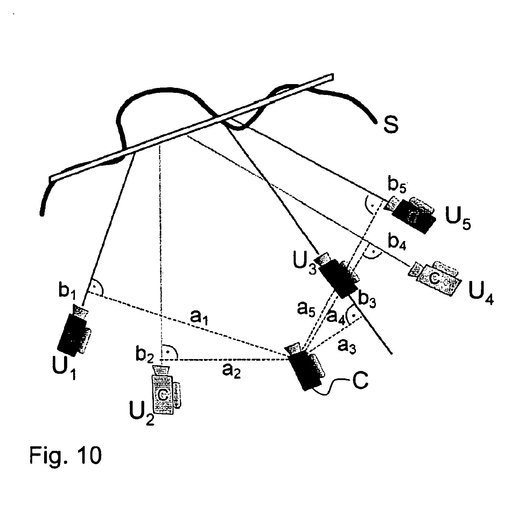

In **Figur 10** ist eine Anordnung für eine Darstellung in Abhängigkeit der Betrachterposition gezeigt. Die Anordnung umfasst mehrere Projektoren $P_i$, die zur Vereinfachung der Abbildung nicht dargestellt sind. Im Laufe der Kalibrierung wird die Kamera C in beispielsweise fünf Kalibrierdurchgängen an fünf verschiedenen Positionen $U_g$ (g=1..5) platziert und auf die Projektionsfläche S ausgerichtet. Dabei wird die Position $U_g$ und die jeweilige Ausrichtung der Kamera C per Funkübertragung erfasst. Zu jeder Position $U_g$ wird in einem eigenen Kalibrierdurchgang in der oben beschriebenen Weise für jeden Projektor $P_i$ ein jeweiliger Satz von Größen ermittelt, der jeweils ein Pixelversatzhilfsfeld $D_{Ugi}$, eine die Größe $FM_{Ugi}$ repräsentierende Oberflächenhilfstextur $T_{SUgi}$ und eine die Größe $EM_{Ugi}$ repräsentierende Umgebungsbeleuchtungshilfstextur $T_{EUgi}$ umfasst. Der ermittelte Satz von Größen wird der betreffenden Position $U_g$ zugeordnet gespeichert. Schärfegrade $\phi_{i,x,y}$ beziehungsweise Wichtungsfaktoren $q_{i,x,y}$ für eine scharfe, multifokale Darstellung brauchen nur einmalig bestimmt zu werden, da diese unabhängig von der Position des Betrachters O konstant bleiben, solange die geometrischen Verhältnisse zwischen Projektionsfläche S und Projektoren $P_i$ konstant sind. Daher kann die Kamera C für die Bestimmung der Schärfegrade $\phi_{i,x,y}$ beziehungsweise Wichtungsfaktoren $q_{i,x,y}$ an einer beliebigen Position angeordnet werden.

Während der regulären Darstellung wird die Position und die Ausrichtung eines Beobachters O verfolgt, beispielsweise mittels sogenanntem Headtracking. Anhand der ermittelten Beobachterposition und der ermittelten Beobachterausrichtung wird das für das geometrische Verzerren und das farbliche Manipulieren beziehungsweise Korrigieren benötigte Pixelversatzfeld D vor dem Rendern komponentenweise für jeden Projektor $P_i$ durch gewichtete Interpolation zwischen den zu den Positionen $U_g$ gespeicherten Pixelversatzhilfsfeldern $D_{Ugi}$ berechnet. Entsprechend werden die Oberflächentextur $T_S$ und die Umgebungsbeleuchtungstextur $T_E$ durch gewichtete Interpolation der jeweiligen Komponenten $m_{Ugi}$ der betreffenden Oberflächenhilfstexturen $T_{SUg}$ beziehungsweise Umgebungsbeleuchtungshilfstexturen $T_{EUg}$ berechnet:
$m_i = w_1 m_{U1i} + ... + w_{5m U5i}$. Die Gewichte $w_g$ werden anhand von Zwischengewichten $p_g$ berechnet aus:

$$w_g = \left(1 - \frac{p_g}{p_{max}}\right)\frac{1}{p_g},$$

mit $p_g = \alpha a_g + (1 - \alpha) b_g$, wobei die Gewichte $w_g$ vor einer weiteren Verwendung zunächst untereinander normiert werden, so dass Gewichte $w_g$ von 0 bis 1,0 resultieren. Zur Bestimmung der für die Zwischengewichte $p_g$ verwendeten Abstände $a_g$ und bg wird die ermittelte Betrachterposition auf die zentrale Projektionsrichtung jeder Position $U_g$ orthogonalprojiziert, woraus Hilfspunkte Hg resultieren. Die Abstände $a_g$ liegen jeweils zwischen der ermittelten Betrachterposition und dem betreffenden Hilfspunkt Hg, wobei ihre Werte untereinander normiert sind. Die Abstände $b_g$ liegen jeweils zwischen den Positionen $U_g$ und dem betreffenden Hilfspunkt $H_g$ und ihre Werte sind ebenfalls untereinander normiert. Der Faktor $\alpha$ bewirkt eine Gewichtung der Abstände, er kann beispielsweise $\alpha$=0,75 betragen. Das Rendern einschließlich der Geometrie- und Farbkorrektur erfolgt somit stets korrekt in Bezug auf die Perspektive der aktuell ermittelten Betrachterposition.

Das erfindungsgemäße Verfahren kann in allen Ausprägungen für eine stereoskopische Darstellung mit einem oder mehr Projektoren verwendet werden. Dazu werden beispielsweise Flüssigkristallblenden vor dem Projektorobjektiven mit aktiven Verschlussbrillen synchronisiert, die von dem oder den Betrachtern getragen werden. Stereoskopische Darstellungen, deren Bildinhalte in Echtzeit gerendert werden, können dabei automatisch auf die Perspektive der verfolgten Beobachterposition angepasst werden. Für die stereoskopische Darstellung können beispielsweise aus dreidimensionalen Daten gerenderte Polygongrafiken verwendet werden.

## BEZUGSZEICHENLISTE

| | |
|---|---|
| $P_{(i)}$ | Projektor |
| $B_i$ | Bildebene |
| S | Projektionsfläche |
| X | Bildpunkt |
| C | Kamera |
| $U_i$ | Position |
| $a_g$ | Abstand Kamera-Projektionsfläche |
| bg | Abstand Kamera-Betrachter |
| Z | Digitales Bild |
| $K_{P(i)}$ | Kalibriermuster |

$K_{C(i)}$      Kalibrierbild
D      Pixelversatzfeld
f      Normierte Intensität
$\phi_{i,xi,yi}$      Schärfegradwert
$q_{i,xi,yi}$      Wichtungsfaktor
B      Bildpuffer
E      Umgebungsbeleuchtung
$I_i$      Zu projizierendes/projiziertes Bild/Intensität
R      Reflektierte Intensität
t      Latenzzeit
M      Materialfarbe
F      Formfaktor
$\alpha$      Einfallswinkel
r      Entfernung
$T_D$      Pixelversatztextur
Ts      Oberflächentextur
$T_E$      Umgebungsbeleuchtungstextur
O      Betrachter

**Patentansprüche**

1. Verfahren zur Darstellung eines digitalen Bildes (Z) auf einer Projektionsfläche (S), wobei mittels eines Projektors (P) ein Inhalt eines Bildpuffers (B) auf die Projektionsfläche (S) projiziert wird, das digitale Bild (Z) während eines Rendervorganges verarbeitet und dabei geometrisch verzerrt wird und wenigstens ein Teil eines verarbeiteten Bildes (I) in den Bildpuffer (B) gerendert wird,
   **dadurch gekennzeichnet,**
   **dass** eine automatische Kalibrierung durchgeführt wird, bei der mittels des Projektors (P) mindestens ein Kalibrierbild ($K_P$) auf die Projektionsfläche (S) projiziert und mittels einer Kamera (C) das projizierte Kalibrierbild ($K_P$) wenigstens teilweise aufgenommen und digitalisiert wird, und ein zweidimensionales Pixelversatzfeld (D) ermittelt wird, indem zu mindestens einem projizierten Pixel eines projizierten Kalibrierbildes ($K_P$) ein zugehöriger aufgenommener Pixel eines digitalisierten, aufgenommenen Kalibrierbildes ($K_C$) identifiziert wird und ein zweidimensionaler geometrischer Versatz zwischen dem projizierten und dem aufgenommenen Pixel ermittelt und als ein Element des zweidimensionalen Pixelversatzfeldes (D) gespeichert wird,
   und **dass** das digitale Bild (Z) während des Rendervorganges anhand des Pixelversatzfeldes (D) geometrisch verzerrt und anhand einer zweidimensionalen Textur (Ts) der Projektionsfläche (S) farblich manipuliert wird.

2. Verfahren nach Anspruch 1, **dadurch gekennzeichnet, dass** das geometrische Verzerren und das farbliche Manipulieren mittels mindestens eines Pixelshaders durchgeführt werden.

3. Verfahren nach Anspruch 1 oder 2, **dadurch gekennzeichnet, dass** die Kamera (C) für die Kalibrierung an einer Betrachterposition angeordnet wird.

4. Verfahren nach einem der Ansprüche 1 bis 3, **dadurch gekennzeichnet, dass** mehrere aufeinanderfolgende Kalibrierbilder ($K_P$) wenigstens teilweise projiziert und aufgenommen werden, wobei projizierte Kalibrierbilder ($K_P$) zeitlich gemultiplexte Streifenmuster enthalten, anhand derer zu projizierten Pixeln zugehörige aufgenommene Pixel ermittelt werden.

5. Verfahren nach einem der Ansprüche 1 bis 4, **dadurch gekennzeichnet, dass**, falls mehrere digitalisierte, aufgenommene Kalibrierbilder ($K_C$) vorliegen, ein Mittelwert mehrerer zu einem aufgenommenen Pixel gehörigen zweidimensionalen geometrischen Versätze ermittelt und als Element des zweidimensionalen Pixelversatzfeldes (D) gespeichert wird.

6. Verfahren nach einem der Ansprüche 1 bis 5, **dadurch gekennzeichnet, dass** mittels des Projektors (P) mindestens ein Testbild projiziert wird, wobei mittels der Kamera (C) wiederholt Bilder aufgenommen und digitalisiert werden bis das Testbild in den digitalisierten, aufgenommenen Bildern identifiziert wird, wobei eine Latenzzeit (t) zwischen dem Projizieren des Testbilds und dem Identifizieren des Testbilds gemessen wird.

7. Verfahren nach einem der Ansprüche 1 bis 6, **dadurch gekennzeichnet, dass** im Falle eines einzelnen Projektors (P) mittels des Projektors (P) ein Rechteck mit weißer Farbe höchster Intensität als Kalibrierbild (K$_P$) projiziert wird, wobei die Projektionsfläche (S) nicht mit Umgebungsbeleuchtung (E) beleuchtet wird, und ein davon digitalisiertes, aufgenommenes Kalibrierbild (K$_C$) als zweidimensionale Oberflächentextur (T$_S$) der Projektionsfläche (S) verwendet wird.

8. Verfahren nach einem der Ansprüche 1 bis 7, **dadurch gekennzeichnet, dass** im Falle mehrerer Projektoren (P$_i$) sequentiell mittels jedes Projektors (P$_i$) ein Rechteck mit weißer Farbe höchster Intensität als Kalibrierbild (K$_P$) projiziert wird, wobei die Projektionsfläche (S) nicht mit Umgebungsbeleuchtung (E) beleuchtet wird, und jeweils ein davon digitalisiertes, aufgenommenes Kalibrierbild (K$_C$) als zweidimensionale Oberflächentextur (Ts) der Projektionsfläche (S) für den betreffenden Projektor (P$_i$) verwendet wird.

9. Verfahren nach einem der Ansprüche 1 bis 8, **dadurch gekennzeichnet, dass** mittels des Projektors (P) ein schwarzes Kalibrierbild (K$_P$) projiziert und mittels der Kamera (C) aufgenommen und digitalisiert wird, wobei dieses digitalisierte, aufgenommene Kalibrierbild (K$_C$) als Umgebungsbeleuchtungstextur (T$_E$) für das farbliche Manipulieren verwendet wird.

10. Verfahren nach einem der Ansprüche 1 bis 9, **dadurch gekennzeichnet, dass** ein für eine Oberflächentextur (T$_S$) oder für eine Umgebungsbeleuchtungstextur (T$_E$) verwendetes digitalisiertes, aufgenommenes Kalibrierbild (K$_C$) zunächst anhand des zweidimensionalen Pixelversatzfeldes (D) und/oder einer zugehörigen Pixelversatztextur (T$_D$) in die Perspektive des Projektors (P) verzerrt wird.

11. Verfahren nach einem der Ansprüche 1 bis 10, **dadurch gekennzeichnet, dass** eine Linsenverzerrung der Kamera (C) nach dem Digitalisieren einer Aufnahme in dieser rechnerisch kompensiert wird.

12. Verfahren nach einem der Ansprüche 1 bis 11, **dadurch gekennzeichnet, dass** Aufnahmen der Kamera (C) mit einer Maske versehen werden.

13. Verfahren nach einem der Ansprüche 1 bis 12, **dadurch gekennzeichnet, dass** die Kalibrierung wiederholt durchgeführt wird, wobei die Kamera (C) in jedem Kalibrierdurchgang an einer anderen Position (U$_g$) angeordnet wird, und das für die jeweilige Position ermittelte Pixelversatzfeld (D) als Pixelversatzhilfsfeld (D$_{Ug}$) und die ermittelte Oberflächentextur (T$_S$) als Oberflächenhilfstextur (T$_{SUg}$) der betreffenden Position (U$_g$) zugeordnet gespeichert werden.

14. Verfahren nach Anspruch 13, **dadurch gekennzeichnet, dass** vor dem geometrischen Verzerren und farblichen Korrigieren eine Position des Betrachters (O) dynamisch ermittelt wird und das Pixelversatzfeld (D) und die Oberflächentextur (Ts) anhand der für die verschiedenen Kamerapositionen ermittelten Pixelversatzhilfsfelder (D$_{Ug}$) und Oberflächenhilfstexturen (T$_{SUg}$) für die ermittelte Position ermittelt werden.

15. Verfahren nach Anspruch 14, **dadurch gekennzeichnet, dass** das Pixelversatzfeld (D) ermittelt wird, indem zwischen den für die verschiedenen Kamerapositionen (U$_g$) ermittelten Pixelversatzhilfsfeldern (D$_{Ug}$) gewichtet interpoliert wird, und dass die Oberflächentextur (T$_S$) ermittelt wird, indem zwischen den für die verschiedenen Kamerapositionen (U$_g$) ermittelten Oberflächenhilfstexturen (T$_{SUg}$) gewichtet interpoliert wird.

16. Verfahren nach einem der vorhergehenden Ansprüche, **dadurch gekennzeichnet, dass** zum Darstellen mehrerer digitaler Bilder (Z$_i$) auf der Projektionsfläche (S) mittels mehrerer Projektoren (P$_i$), die auf unterschiedliche Bildebenen (B$_i$) eingestellt sind, Inhalte von betreffenden Bildpuffern, welche zu projizierende Intensitäten (I$_i$) von Pixeln enthalten, in Bereiche der Projektionsfläche (S) projiziert werden, wobei für einen Bildpunkt (X) der Projektionsfläche (S), auf den mehrere Pixel aus unterschiedlichen Projektoren (P$_i$) simultan projiziert werden, die durch die betreffenden Projektoren (P$_i$) für diese Pixel zu projizierenden Intensitäten (I$_i$) anhand von Schärfegradwerten ($\phi_{i,xi,yi}$) der einzelnen betreffenden Pixel manipuliert werden.

17. Verfahren nach Anspruch 13, **dadurch gekennzeichnet, dass** das Manipulieren anhand der Schärfegradwerte ($\phi_{i,xi,yi}$) mittels mindestens eines Pixelshaders durchgeführt wird.

18. Verfahren nach Anspruch 13 oder 14, **dadurch gekennzeichnet, dass** das Manipulieren anhand der Schärfegradwerte ($\phi_{i,xi,yi}$) erfolgt, indem von mehreren, aus unterschiedlichen Projektoren (P$_i$) auf denselben Bildpunkt (X) der Projektionsfläche (S) projizierbaren Pixeln die Intensität (I$_i$) desjenigen mit dem höchsten Schärfegradwert ($\phi_{i,xi,yi}$)

unverändert bleibt, während die anderen dieser Pixel dunkel eingestellt werden.

**19.** Verfahren nach Anspruch 13 oder 14, **dadurch gekennzeichnet, dass** das Manipulieren anhand der Schärfegradwerte ($\phi_{i,xi,yi}$) erfolgt, indem die Intensitäten mehrerer aus unterschiedlichen Projektoren ($P_i$) auf denselben Bildpunkt der Projektionsfläche (S) projizierbarer Pixel anhand ihrer Schärfegradwerte ($\phi_{i,xi,yi}$) gewichtet skaliert werden.

**20.** Verfahren nach einem der Ansprüche 13 bs 16, **dadurch gekennzeichnet, dass** die Schärfegradwerte ($\phi_{i,xi,yi}$) der Pixel in einem Kalibrierdurchgang ermittelt werden, wozu nacheinander mittels jedes Projektors ($P_i$) ein Kalibriermuster ($K_{Pi}$) projiziert und die von der Projektionsfläche (S) reflektierten Projektionen mittels einer Kamera (C) in betreffende Kalibrierbilder ($K_{Ci}$) aufgenommen werden.

**21.** Verfahren nach Anspruch 17, **dadurch gekennzeichnet, dass** in einem der aufgenommen Kalibrierbilder ($K_{Ci}$) eine Intensität ($fl_i$) eines Pixels ein erstes Mal normiert wird, indem sie zu der Intensität ($I_i$) des korrespondierenden Pixels in dem projizierten Kalibriermuster ($K_{Pi}$) ins Verhältnis gesetzt wird.

**22.** Verfahren nach Anspruch 18, **dadurch gekennzeichnet, dass** mehrere erstmalig normierte Intensitäten (f) eines Kalibrierbildes ($K_{Ci}$) untereinander ein zweites Mal normiert werden.

**23.** Verfahren nach Anspruch 18 oder 19, **dadurch gekennzeichnet, dass** ein Schärfegradwert ($\phi_{i,xi,yi}$) aus normierten Intensitäten (f) eines Kalibrierbildes ($K_{Ci}$) mittels Bildzerlegung unter Anwendung des momenterhaltenden Prinzips ermittelt wird.

**24.** Verfahren nach Anspruch 20, **dadurch gekennzeichnet, dass** die Bildzerlegung innerhalb eines zweidimensionalen Abtastausschnitts des betreffenden Kalibrierbilds ($K_{Ci}$) durchgeführt wird.

**25.** Verfahren nach einem der Ansprüche 17 bis 21, **dadurch gekennzeichnet, dass** das Kalibriermuster ($K_{Pi}$) für einen Projektor ($P_i$) in mehreren Schritten verschoben wird und nach jedem Schritt ein betreffendes Kalibrierbild ($K_{Ci,n}$) aufgenommen wird.

**26.** Verfahren nach einem der Ansprüche 17 bis 22, **dadurch gekennzeichnet, dass** als Kalibriermuster ($K_{Pi}$) ein Gitter aus kreisförmigen Punkten verwendet wird.

**27.** Verfahren nach einem der Ansprüche 17 bis 23, **dadurch gekennzeichnet, dass** das Kalibriermuster ($K_{Pi}$) vor dem Projizieren für jeden Projektor ($P_i$) individuell in dessen Perspektive hinsichtlich der Eigenschaften der Projektionsfläche (S) geometrie- und/oder farbkorrigiert wird.

**28.** Verfahren nach einem der vorhergehenden Ansprüche, **dadurch gekennzeichnet, dass** beim farblichen Manipulieren eine wechselseitige Beleuchtung von verschiedenen Projektionsflächensegmenten ($\sigma_\gamma$, $\sigma_\varepsilon$) anhand von mit den Projektionsflächensegmenten ($\sigma_\gamma$, $\sigma_\varepsilon$) korrespondierenden Formfaktoren ($F_{\gamma\varepsilon}$) kompensiert wird.

**29.** Verfahren nach Anspruch 28, **dadurch gekennzeichnet, dass** das Kompensieren iterativ durchgeführt wird, wobei eine auf ein Projektionsflächensegment ($\sigma_\gamma$) zu projizierende Intensität (I) anhand einer reflektierten Streuintensität

$$\left( A_\gamma^h \right)$$ manipuliert wird.

**30.** Vorrichtung zur Darstellung eines digitalen Bildes (Z) auf einer Projektionsfläche (S) mit einer Steuereinheit, mindestens einem Projektor (P) und einer Kamera (C), wobei der Projektor (P) und die Kamera (C) mit der Steuereinheit gekoppelt sind und die Steuereinheit das digitale Bild (Z) während eines Rendervorganges verarbeitet und dabei geometrisch verzerrt und wenigstens ein Teil eines verarbeiteten Bildes (I) in einen Bildpuffer (B) gerendert wird, **dadurch gekennzeichnet,**
**dass** die Steuereinheit den Bildpuffer (B) enthält und dieser mit mindestens einem programmierbaren Pixelshader verbunden ist, der beim Rendern in den Bildpuffer (B) zum geometrischen Verzerren des digitalen Bildes (Z) dient, und **dass** die Steuereinheit das digitale Bild (Z) anhand eines zweidimensionalen Pixelversatzfeldes (D), das Informationen über die Projektionsfläche (S) enthält, geometrisch verzerrt und anhand einer zweidimensionalen Oberflächentextur ($T_S$) der Projektionsfläche (S) farblich manipuliert.

**31.** Vorrichtung nach Anspruch 30, **dadurch gekennzeichnet, dass** die Steuereinheit mit einer bildgebenden Quelle verbunden ist, welche digitale Bilder (Z) an die Steuereinheit abgibt, die nach einem Kalibriervorgang auf der Projektionsfläche (S) darzustellen sind.

**32.** Vorrichtung nach Anspruch 30 oder 31, **dadurch gekennzeichnet, dass** die Steuereinheit beim farblichen Manipulieren eine wechselseitige Beleuchtung von verschiedenen Projektionsflächensegmenten ($\sigma_\gamma$, $\sigma_\epsilon$) anhand von mit den Projektionsflächensegmenten ($\sigma_\gamma$, $\sigma_\epsilon$) korrespondierenden Formfaktoren ($F_{\gamma\epsilon}$) kompensiert.

**33.** Vorrichtung nach Anspruch 30, 31 oder 32, **dadurch gekennzeichnet, dass** mehrere, aus unterschiedlichen Richtungen projizierende Projektoren ($P_i$) angeordnet sind, wobei sich die beleuchteten Bereiche der Projektoren $P_i$ überlappen oder unabhängig voneinander jeweils einen Teil der Projektionsfläche (S) beleuchten.

**34.** Vorrichtung nach einem der Ansprüche 30 bis 33, **dadurch gekennzeichnet, dass** die Projektoren ($P_1$, $P_2$) schräg auf ihre Projektionsfelder gerichtet sind, wobei sich ihre Projektionsfelder in einer multifokalen Projektion überlappen, und wobei ein erster Projektor ($P_1$) so eingestellt ist, dass er eine erste Bildebene $B_1$ fest fokussiert und ein zweiter Projektor ($P_2$) auf eine zweite Bildebene $B_2$ fest fokussiert ist.

**35.** Vorrichtung nach einem der Ansprüche 30 bis 34, **dadurch gekennzeichnet, dass** vier Projektoren ($P_1$ ... $P_4$) auf unterschiedliche Bildebenen ($B_1$ ... $B_4$) eingestellt sind, wobei sich die Projektionsfelder je zweier Projektoren ($P_i$) zumindest teilweise überlappen.

**36.** Vorrichtung nach einem der Ansprüche 30 bis 35, **dadurch gekennzeichnet, dass** vier Projektoren ($P_1$ ... $P_4$) in einer einzelnen Geräteeinheit angeordnet sind, wobei die vier Projektionsfelder parallel versetzt ausgerichtet sind und sich alle gegenseitig überlagern.

**37.** Vorrichtung nach Anspruch 36, **dadurch gekennzeichnet, dass** die Kamera (C) in oder an der Geräteeinheit angeordnet ist.

**38.** Vorrichtung nach einem der Ansprüche 30 bis 37, **dadurch gekennzeichnet, dass** die Kamera (C) lösbar an der Anordnung befestigt ist.

**Claims**

**1.** Method for representing a digital image (Z) on a projection surface (S), whereas the content of an image buffer (B) is projected onto the projection surface (S) by means of a projector (P), the digital image (Z) is processed during a rendering process and is thereby geometrically distorted and at least a part of the processed image (I) is rendered into the image buffer (B), **characterised in that** an automatic calibration is performed in which at least one calibration image ($K_P$) is projected on the projection surface (S) and that the projected calibration image ($K_P$) is at least partially recorded and digitized by means of a camera (C) and that a two-dimensional pixel displacement map (D) is determined by identifying an associated recorded pixel of a digitized, recorded calibration image ($K_C$) for at least one projected pixel of a projected calibration image ($K_P$) and a two-dimensional geometric displacement between the projected and the recorded pixel is determined and stored as an element of the two-dimensional pixel displacement map (D) and that the digital image (Z) is geometrically distorted during the rendering process by means of the pixel displacement map (D) and is manipulated in terms of colour by means of a two-dimensional surface texture ($T_S$) of the projection surface (S).

**2.** Method according to claim 1, **characterised in that** geometrical distortion and colour manipulation are performed by means of at least one pixel shader.

**3.** Method according to claim 1 or 2, **characterised in that** the camera (C) is arranged at an observer position for calibration purposes.

**4.** Method according to one of the claims 1 to 3, **characterised in that** a plurality of successive calibration images ($K_P$) is at least partially projected and recorded, whereas projected calibration images ($K_P$) contain temporally multiplexed stripe patterns by means of which recorded pixels associated with pixels to be projected are determined.

**5.** Method according to one of the claims 1 to 4, **characterised in that** if there is a plurality of digitized, recorded calibration images ($K_C$), a mean value of a plurality of two-dimensional geometric displacements belonging to a recorded pixel is determined and stored as an element of the two-dimensional pixel displacement map (D).

6. Method according to one of the claims 1 to 5, **characterised in that** at least one test image is projected by means of the projector (P), whereby images are repeatedly recorded and digitized by means of the camera (C) until the test image is identified in the digitized, recorded images, a latency time (t) being measured between projection of the test image and identification of the test image.

7. Method according to one of the claims 1 to 6, **characterised in that** in case of a single projector (P), a rectangle with very high intensity white colour is projected as calibration image ($K_P$) by means of the projector (P), whereas the projection surface (S) is not illuminated with environmental illumination (E), and a recorded calibration image ($K_C$) digitized thereby is used as two-dimensional surface texture ($T_S$) of the projection surface (S).

8. Method according to one of the claims 1 to 7, **characterised in that** in case of a plurality of projectors ($P_i$), a rectangle with very high intensity white colour is projected sequentially as calibration image ($K_P$) by means of each projector ($P_i$), whereas the projection surface (S) is not illuminated with environmental illumination (E), and respectively one recorded calibration image ($K_C$) digitized thereby is used as two-dimensional surface texture ($T_S$) of the projection surface (S) for the respective projector ($P_i$).

9. Method according to one of the claims 1 to 8, **characterised in that** a black calibration image ($K_P$) is projected by means of the projector ($P_i$) and that it is recorded and digitized by means of the camera (C), whereas this digitized, recorded calibration image ($K_C$) is used as environmental illumination texture ($T_E$) for colour manipulation.

10. Method according to one of the claims 1 to 9, **characterised in that** a digitized, recorded calibration image ($K_C$) used for a surface texture ($T_S$) or for an environmental illumination texture ($T_E$) is initially distorted into the perspective of the projector (P) using the two-dimensional pixel displacement map (D) and/or an associated pixel displacement texture ($T_D$).

11. Method according to one of the claims 1 to 10, **characterised in that** a lens distortion of the camera (C) is compensated after the digitisation of a recording therein by computer.

12. Method according to one of the claims 1 to 11, **characterised in that** recordings of the camera (C) are provided with a mask.

13. Method according to one of the claims 1 to 12, **characterised in that** the calibration is performed repeatedly, whereas the camera (C) is arranged in a different position ($U_g$) for each calibration process, and the pixel displacement map (D) determined for each position is stored as a pixel displacement auxiliary map ($D_{Ug}$) and the determined surface texture ($T_S$) is stored as a surface auxiliary texture ($T_{SUg}$) allocated to the associated position (Ug).

14. Method according to claim 13, **characterised in that** an observer's (O) position is dynamically determined before the geometric distortion and colour correction and the pixel displacement map (D) and the surface texture ($T_S$) are determined using pixel displacement auxiliary maps ($D_{Ug}$) determined for the different camera positions and the position determined for the surface auxiliary textures ($T_{SUg}$).

15. Method according to claim 14, **characterised in that** the pixel displacement map (D) is determined **in that** there is weighted interpolation between the pixel displacement auxiliary maps ($D_{Ug}$) determined for the different camera positions (Ug), and **in that** the surface texture ($T_S$) is determined **in that** there is weighted interpolation between the surface auxiliary textures ($T_{SUg}$) determined for the different camera positions (Ug).

16. Method according to one of the preceding claims, **characterised in that** for representing a plurality of digital images ($Z_i$) on the projection surface (S) by means of a plurality of projectors ($P_i$) that are set for different image planes ($B_i$), contents of appropriate image buffers, containing intensities ($I_i$) of pixels to be projected, are projected in areas of the projection surface (S), whereby for one image point (X) of the projection surface (S) onto which point a plurality of pixels are simultaneously projected from different projectors ($P_i$), intensities ($I_i$) to be projected for these pixels using the respective projectors ($P_i$) are manipulated using definition values ($\Phi_{i, xi, yi}$) for the individual respective pixels.

17. Method according to claim 13, **characterised in that** the manipulation using the definition values ($\Phi_{i, xi, yi}$) is performed by means of at least one pixel shader.

18. Method according to claim 13 or 14, **characterised in that** the manipulation using the definition values ($\Phi_{i,\,xi,\,yi}$) occurs **in that** of a plurality of pixels that can be projected from different projectors ($P_i$) onto the same image point (X) of the projection surface (S), the intensity ($I_i$) of those with the highest definition value ($\Phi_{i,\,xi,\,yi}$) remains unchanged, while the other pixels are set to be dark.

19. Method according to claim 13 or 14, **characterised in that** the manipulation using the definition values ($\Phi_{i,\,xi,\,yi}$) occurs **in that** the intensities of a plurality of different projectors ($P_i$) onto the same image point of said projection surface (S) are scaled in a weighted manner on the basis of their definition values ($\Phi_{i,\,xi,\,yi}$).

20. Method according to one of the claims 13 to 16, **characterised in that** the definition values ($\Phi_{i,\,xi,\,yi}$) of the pixels are determined in a calibration process, for which purpose a calibration pattern ($K_{Pi}$) is projected successively by means of each projector ($P_i$) and the projections reflected by the projection surface (S) are recorded in appropriate calibration images ($K_{Ci}$) by means of a camera (C).

21. Method according to claim 17, **characterised in that** in one of the recorded calibration images ($K_{Ci}$) an intensity ($fl_i$) of a pixel is standardised by placing it in relation to the intensity ($I_i$) of the corresponding pixel in the projected calibration pattern ($K_{Pi}$).

22. Method according to claim 18, **characterised in that** a plurality of intensities (f) that have been standardised for the first time and that are from a calibration image ($K_{Ci}$) are standardised with one another a second time.

23. Method according to claim 18 or 19, **characterised in that** a definition value ($\Phi_{i,\,xi,\,yi}$) is determined from standardised intensities (f) of a calibration image ($K_{Ci}$) by means of image dissection using the moment retaining principle.

24. Method according to claim 20, **characterised in that** the image dissection is performed within a two-dimensional scanning segment of the associated calibration image ($K_{Ci}$).

25. Method according to one of the claims 17 to 21, **characterised in that** the calibration pattern ($K_{Pi}$) for one projector (Pi) is displaced in multiple steps and an associated calibration image ($K_{Ci,n}$) is recorded after each step.

26. Method according to one of the claims 17 to 22, **characterised in that** a matrix of circular points is used for the calibration pattern ($K_{Pi}$).

27. Method according to one of the claims 17 to 23, **characterised in that** the calibration pattern ($K_{Pi}$) is corrected in terms of geometry and/or colour with respect to the properties of the projection surface (S) individually for each projector ($P_i$) before the projection.

28. Method according to one of the preceding claims, **characterised in that** during colour manipulation mutual illumination of different projection surface segments ($\sigma_\gamma, \sigma_\varepsilon$) is compensated by form factors ($F_{\gamma\varepsilon}$) corresponding to projection surface segments ($\sigma_\gamma, \sigma_\varepsilon$).

29. Method according to claim 28, **characterised in that** the compensation is performed iteratively, whereas an intensity (I) to be projected onto a projection surface segment ($\sigma_\gamma$) is manipulated using a reflected scatter intensity $( A_\gamma^h )$.

30. Apparatus for representing a digital image (Z) on a projection surface (S) with a control unit, at least one projector (P) and a camera (C), whereas the projector (P) and the camera (C) are connected to the control unit and the control unit processes the digital image (Z) during a rendering process geometrically distorting it and at least a part of a processed image (I) is rendered into an image buffer (B), **characterised in that**,
    the control unit contains the image buffer (B) that is connected to at least one programmable pixel shader for geometrically distorting the digital image (Z) during the rendering into the image buffer (B),
    and **in that** the control unit geometrically distorts the digital image (Z) using a two-dimensional pixel displacement map (D) containing information about the projection surface (S) and that the control unit manipulates the digital image (Z) in terms of colour using a two-dimensional surface texture ($T_S$) of the projection surface (S).

31. Apparatus according to claim 30, **characterised in that** the control unit is connected to an image-producing source that delivers digital images (Z) to the control unit that are to be represented on the projection surface (S) after a calibration process.

**32.** Apparatus according to claim 30 or 31, **characterised in that** during colour manipulation the control unit compensates mutual illumination of various projection surface segments ($\sigma_\gamma$, $\sigma_\varepsilon$) using form factors ($F_{\gamma\varepsilon}$) corresponding to the projection surface segments ($\sigma_\gamma$, $\sigma_\varepsilon$).

**33.** Apparatus according to claim 30, 31 or 32, **characterised in that** a plurality of projectors ($P_i$) projecton from different directions are arranged, the illuminated areas of the projectors ($P_i$) overlapping or each illuminating a portion of the projection surface (S) independent of one another.

**34.** Apparatus according to one of the claims 30 to 33, **characterised in that** the projectors ($P_1$, $P_2$) are oriented in a bevel manner to their projection fields, whereas their projection fields overlap one another in a multifocal projection and whereas a first projector ($P_1$) is set in such a manner that it has a fixed focus on a first image plane ($B_1$) and a second projector ($P_2$) has a fixed focus on a second image plane ($B_2$).

**35.** Apparatus according to one of the claims 30 to 34, **characterised in that** four projectors ($P_1$ ... $P_4$) are set to different image planes ($B_1$ ... $B_4$), whereas the projection fields of every two projectors ($P_i$) at least partially overlap.

**36.** Apparatus according to one of the claims 30 to 35, **characterised in that** four projectors ($P_1$ ... $P_4$) are arranged in a single equipment unit, whereas the four projection fields are oriented offset in parallel and overlapping one another.

**37.** Apparatus according to claim 36, **characterised in that** the camera (C) is arranged in or on the equipment unit.

**38.** Apparatus according to one of the claims 30 to 37, **characterised in that** the camera (C) is detachably attached to the arrangement.

**Revendications**

**1.** Procédé de représentation d'une image numérique (Z) sur une surface de projection (S), où un contenu d'un tampon d'image (B) est projeté sur la surface de projection (S) au moyen d'un projecteur (P), l'image numérique (Z) est traitée pendant un processus de rendu et géométriquement distordue, et au moins une partie d'une image traitée (I) est rendue dans le tampon d'image (B),
**caractérisé en ce qu'**un calibrage automatique est exécuté, au cours duquel au moins une image de calibrage ($K_p$) est projetée sur la surface de projection (S) au moyen du projecteur (P) et l'image de calibrage projetée ($K_p$) est au moins partiellement enregistrée et numérisée au moyen d'une caméra (C), et un champ bidimensionnel de décalage de pixels (D) est déterminé par identification d'un pixel enregistré d'une image de calibrage enregistrée numérisée ($K_c$) correspondant à au moins un pixel projeté d'une image de calibrage projetée ($K_p$), et détermination d'un décalage géométrique bidimensionnel entre le pixel projeté et le pixel enregistré, lequel est mémorisé comme un élément du champ bidimensionnel de décalage de pixels (D),
et **en ce que** l'image numérique (Z) est géométriquement distordue sur la base du champ bidimensionnel de décalage de pixels (D) pendant le processus de rendu, et chromatiquement manipulée sur la base d'une texture de surface bidimensionnelle ($T_s$) de la surface de projection (S).

**2.** Procédé selon la revendication 1, **caractérisé en ce que** la distorsion géométrique et la manipulation chromatique sont effectuées au moyen d'au moins un pixel shader.

**3.** Procédé selon la revendication 1 ou la revendication 2, **caractérisé en ce que** la caméra (C) est prévue à une position d'observateur pour le calibrage.

**4.** Procédé selon l'une des revendications 1 à 3, **caractérisé en ce que** plusieurs images de calibrage ($K_p$) successives sont au moins partiellement projetées et enregistrées, les images de calibrage projetées ($K_p$) contenant des motifs à bandes multiplexés temporellement, sur la base desquels des pixels enregistrés correspondant à des pixels projetés sont déterminés.

**5.** Procédé selon l'une des revendications 1 à 4, **caractérisé en ce que**, si plusieurs images de calibrage enregistrées numérisées ($K_c$) sont présentées, une moyenne de plusieurs décalages géométriques bidimensionnels correspondant à un pixel enregistré sera déterminée et mémorisée comme élément du champ bidimensionnel de décalage de pixels (D).

6. Procédé selon l'une des revendications 1 à 5, **caractérisé en ce qu'**au moins une image de test est projetée au moyen du projecteur (P), des images étant enregistrées et numérisées de manière répétée au moyen de la caméra (C) jusqu'à ce que l'image de test soit identifiée dans les images enregistrées numérisées, un temps de latence (t) étant mesuré entre la projection de l'image de test et l'identification de l'image de test.

7. Procédé selon l'une des revendications 1 à 6, **caractérisé en ce que**, dans le cas d'un seul projecteur (P), un rectangle de couleur blanche d'intensité supérieure à l'image de calibrage ($K_p$) est projeté au moyen du projecteur (P), la surface de projection (S) n'étant pas éclairée par l'éclairage ambiant (E), et une image de calibrage ($K_c$) enregistrée numérisée correspondante étant utilisée comme texture de surface bidimensionnelle ($T_s$) de la surface de projection (S).

8. Procédé selon l'une des revendications 1 à 7, **caractérisé en ce que**, dans le cas de plusieurs projecteurs ($P_i$), un rectangle de couleur blanche d'intensité supérieure à l'image de calibrage ($K_p$) est projeté séquentiellement au moyen de chaque projecteur ($P_i$), la surface de projection (S) n'étant pas éclairée par l'éclairage ambiant (E), et une image de calibrage ($K_c$) enregistrée numérisée correspondante étant respectivement utilisée comme texture de surface bidimensionnelle ($T_s$) de la surface de projection (S) pour le projecteur ($P_i$) concerné.

9. Procédé selon l'une des revendications 1 à 8, **caractérisé en ce qu'**une image de calibrage ($K_p$) noire est projetée au moyen du projecteur (P) et enregistrée et numérisée au moyen de la caméra (C), cette image de calibrage ($K_c$) enregistrée numérisée étant utilisée comme texture d'éclairage ambiant (TE) pour la manipulation chromatique.

10. Procédé selon l'une des revendications 1 à 9, **caractérisé en ce qu'**une image de calibrage ($K_c$) enregistrée numérisée utilisée pour une texture de surface ($T_s$) ou pour une texture d'éclairage ambiant ($T_E$) est d'abord distordue dans la perspective du projecteur (P) sur la base du champ bidimensionnel de décalage de pixels (D) et/ou d'une texture de décalage de pixels ($T_D$) correspondante.

11. Procédé selon l'une des revendications 1 à 10, **caractérisé en ce qu'**après la numérisation d'un enregistrement, une distorsion de lentille de la caméra (C) est compensée par calcul dans celui-ci.

12. Procédé selon l'une des revendications 1 à 11, **caractérisé en ce que** les enregistrements de la caméra (C) sont pourvus d'un masque.

13. Procédé selon l'une des revendications 1 à 13, **caractérisé en ce que** le calibrage est exécuté de manière répétée, la caméra (C) étant disposée à une autre position ($U_g$) pour chaque calibrage, le champ de décalage de pixels (D) déterminé pour chaque position étant mémorisé comme champ de décalage de pixels auxiliaires ($DU_g$) et la texture de surface ($T_s$) déterminée étant mémorisée comme texture de surface auxiliaire ($TSU_g$) affectée à la position ($U_g$) concernée.

14. Procédé selon la revendication 13, **caractérisé en ce que** préalablement à la distorsion géométrique et à la correction chromatique, une position de l'observateur (O) est déterminée dynamiquement, et le champ de décalage de pixels (D) et la texture de surface ($T_s$) sont déterminés pour la position déterminée sur la base des champs de décalage de pixels auxiliaires ($DU_g$) et des textures de surface auxiliaires ($TSU_g$) déterminés pour les différentes positions de caméra.

15. Procédé selon la revendication 14, **caractérisé en ce que** le champ de décalage de pixels (D) est déterminé par interpolation pondérée entre les positions de caméra ($U_g$) pour les différents champs de décalage de pixels auxiliaires ($DUg$) déterminés, et **en ce que** la texture de surface ($T_s$) est déterminée par interpolation pondérée entre les textures de surface auxiliaires ($TSU_g$) déterminées pour les différentes positions de caméra ($U_g$).

16. Procédé selon l'une des revendications précédentes, **caractérisé en ce que**, pour la représentation de plusieurs images numériques ($Z_i$) sur la surface de projection (S) au moyen de plusieurs projecteurs ($P_i$) réglés sur des plans d'image ($B_i$) différents, des contenus des tampons d'image correspondants, contenant des intensités ($I_i$) de pixels à projeter, sont projetés dans des zones de la surface de projection (S), les intensités ($I_i$) desdits pixels à projeter par les projecteurs ($P_i$) correspondants étant, pour un point d'image (X) de la surface de projection (S) sur lequel plusieurs pixels sont simultanément projetés par des projecteurs ($P_i$) différents, manipulées sur la base de valeurs de degrés d'intensité ($\Phi_{i,xi,yi}$) des différents pixels concernés.

**17.** Procédé selon la revendication 13, **caractérisé en ce que** la manipulation sur la base des valeurs de degrés d'intensité ($\Phi_{i,xi,yi}$) est effectuée au moyen d'au moins un pixel shader.

**18.** Procédé selon la revendication 13 ou la revendication 14, **caractérisé en ce que** la manipulation sur la base des valeurs de degrés d'intensité ($\Phi_{i,xi,yi}$) est effectuée en ce que, parmi plusieurs pixels projetables par des projecteurs ($P_i$) différents sur le même point d'image (X) de la surface de projection (S), l'intensité ($I_i$) de celui présentant la valeur de degré d'intensité ($\Phi_{i,xi,yi}$) la plus élevée reste inchangé, alors que les autres pixels sont assombris.

**19.** Procédé selon la revendication 13 ou la revendication 14, **caractérisé en ce que** la manipulation sur la base des valeurs de degrés d'intensité ($\Phi_{i,xi,yi}$) est effectuée par changement d'échelle pondéré des intensités de plusieurs pixels projetables par des projecteurs ($P_i$) différents sur le même point d'image de la surface de projection (S), sur la base de leurs valeurs de degrés d'intensité ($\Phi_{i,xi,yi}$).

**20.** Procédé selon l'une des revendications 13 à 16, **caractérisé en ce que** les valeurs de degrés d'intensité ($\Phi_{i,xi,yi}$) des pixels sont déterminées lors d'un calibrage, un motif de calibrage ($K_{Pi}$) étant projeté à cet effet au moyen de chaque projecteur ($P_i$) successivement, et les projections réfléchies par la surface de projection (S) étant enregistrées dans des images de calibrage ($K_{Ci}$) correspondantes au moyen d'une caméra (C).

**21.** Procédé selon la revendication 17, **caractérisé en ce que** dans une des images de calibrage ($K_{Ci}$) enregistrées, une intensité ($fl_i$) d'un pixel est normalisée une première fois en étant mise en rapport avec l'intensité ($I_i$) du pixel correspondant dans le motif de calibrage ($K_{Pi}$) projeté.

**22.** Procédé selon la revendication 18, **caractérisé en ce que** plusieurs intensités (f) d'une image de calibrage ($K_{Ci}$) normalisées pour la premières fois, sont normalisées une deuxième fois entre elles.

**23.** Procédé selon la revendication 18 ou la revendication 19, **caractérisé en ce qu'**une valeur de degré d'intensité ($\Phi_{i,xi,yi}$) est déterminée pour des intensités normalisées (f) d'une image de calibrage ($K_{Ci}$) au moyen d'une distorsion d'image par application du principe de conservation du moment.

**24.** Procédé selon la revendication 20, **caractérisé en ce que** la distorsion d'image est effectuée à l'intérieur d'un fragment de balayage bidimensionnel de l'image de calibrage concernée ($K_{Ci}$).

**25.** Procédé selon l'une des revendications 17 à 21, **caractérisé en ce que** le motif de calibrage ($K_{Pi}$) pour un projecteur ($P_i$) est décalé en plusieurs phases, et **en ce qu'**une image de calibrage ($K_{Ci,n}$) correspondante est enregistrée après chaque phase.

**26.** Procédé selon l'une des revendications 17 à 22, **caractérisé en ce qu'**une grille de points circulaires est utilisée comme motif de calibrage ($K_{Pi}$).

**27.** Procédé selon l'une des revendications 17 à 23, **caractérisé en ce qu'**avant projection, le motif de calibrage ($K_{Pi}$) fait l'objet d'une correction de géométrie et/ou de couleur individuelle pour chaque projecteur ($P_i$) dans la perspective de celui-ci, relativement aux propriétés de la surface de projection (S).

**28.** Procédé selon l'une des revendications précédentes, **caractérisé en ce que**, lors de la manipulation chromatique, un éclairage mutuel de différents segments de surface de projection ($\sigma_\gamma$, $\sigma_\varepsilon$) est compensé sur la base de facteurs formels ($F_{\gamma\varepsilon}$) correspondant aux segments de surface de projection ($\sigma_\gamma$, $\sigma_\varepsilon$).

**29.** Procédé selon la revendication 28, **caractérisé en ce que** la compensation est exécutée de manière itérative, une intensité (I) à projeter sur un segment de surface de projection ($\sigma_\gamma$) étant manipulée sur la base d'une intensité de diffusion réfléchie ($A_{h\,\gamma}$).

**30.** Dispositif pour la représentation d'une image numérique (Z) sur une surface de projection (S), avec une unité de commande, au moins un projecteur (P) et une caméra (C), le projecteur (P) et la caméra (C) étant accouplés à l'unité de commande, et l'unité de commande traitant l'image numérique (Z) pendant un processus de rendu et la distordant géométriquement, et au moins une partie d'une image traitée (I) étant rendue dans un tampon d'image (B), **caractérisé en ce que** l'unité de commande contient le tampon d'image (B) et celui-ci est relié à au moins un pixel shader programmable, lequel sert à la distorsion géométrique de l'image numérique (Z) lors du rendu dans le tampon d'image (B),

et **en ce que** l'unité de commande distord géométriquement l'image numérique (Z) sur la base d'un champ bidimensionnel de décalage de pixels (D) contenant des informations sur la surface de projection (S), et la manipule chromatiquement sur la base d'une texture de surface bidimensionnelle ($T_s$) de la surface de projection (S).

31. Dispositif selon la revendication 30, **caractérisé en ce que** l'unité de commande est reliée à une source d'images qui livre à l'unité de commande des images numériques (Z) à représenter sur la surface de projection (S) après un processus de calibrage.

32. Dispositif selon la revendication 30 ou la revendication 31, **caractérisé en ce que**, lors de la manipulation chromatique, l'unité de commande compense un éclairage mutuel de différents segments de surface de projection ($\sigma_\gamma$, $\sigma_\varepsilon$) sur la base de facteurs formels ($F_{\gamma\varepsilon}$) correspondant aux segments de surface de projection ($\sigma_\gamma$, $\sigma_\varepsilon$).

33. Dispositif selon la revendication 30, 31 ou la revendication 32, **caractérisé en ce que** plusieurs projecteurs ($P_i$) sont disposés, projetant dans des directions différentes, les zones éclairées des projecteurs ($P_i$) se chevauchant ou éclairant chacune une partie de la surface de projection (S) indépendamment des autres.

34. Dispositif selon l'une des revendications 30 à 33, **caractérisé en ce que** les projecteurs ($P_i$, $P_2$) sont orientés obliquement vers leurs champs de projection, lesdits champs de projection se chevauchant en une projection multifocale, un premier projecteur ($P_1$) étant réglé de manière à focaliser fixement un premier plan d'image $B_1$, et un deuxième projecteur ($P_2$) étant fixement focalisé sur un deuxième plan d'image $B_2$.

35. Dispositif selon l'une des revendications 30 à 34, **caractérisé en ce que** quatre projecteurs ($P_1$ ... $P_4$) sont réglés sur des plans d'image différents ($B_1$ ... $B_4$), les champs de projection de deux projecteurs ($P_i$) se chevauchant au moins partiellement.

36. Dispositif selon l'une des revendications 30 à 35, **caractérisé en ce que** quatre projecteurs ($P_1$ ... $P_4$) sont disposés dans une seule unité d'appareil, les quatre champs de projection étant décalés parallèlement et tous superposés l'un à l'autre.

37. Dispositif selon la revendication 36, **caractérisé en ce que** la caméra (C) est disposée dans ou contre l'unité d'appareil.

38. Dispositif selon l'une des revendications 30 à 37, **caractérisé en ce que** la caméra (C) est fixée de manière amovible au dispositif.

Fig. 1

Digitales Bild Z

Pixelversatzfeld D          Oberflächentextur $T_S$

Bildverarbeitung:
Rendern im Bildpuffer B

Geometrische    Farbliche
Verzerrung    Manipulation

Verarbeitetes, zu projizierendes
Bild I im Bildpuffer B

Projizieren des Bildpufferinhalts

# Fig. 2

K1     ( Testbild ) → ( Latenzzeit t )

K2     ( zeitlich gemultiplexte Streifenmuster mit Phasenverschiebungen ) → ( Pixelversatzfeld D ) → ( Pixelversatztextur $T_D$ )

K3     ( Weißes Bild I=1 ) → ( Oberflächentextur $T_S \sim FM$ )

K4     ( schwarzes Bild I=0 ) → ( Umgebungsbeleuchtungstextur $T_E \sim EM$ )

( Digitales Bild Z )     ( Opakes Rechteck )

Rendern im Bildpuffer B mittels Pixelshader

( Verarbeitetes, zu projizierendes Bild I im Bildpuffer B )

Projizieren des Bildpufferinhalts

# Fig. 3

Fig. 4a          Fig. 4b

Fig. 4c

Fig. 5

Fig. 6

Fig. 7

Fig. 8

Fig. 9

Fig. 10

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 10251217 B3
- EP 1434434 A

### In der Beschreibung aufgeführte Nicht-Patentliteratur

- **Guehring.** Dense 3d surface acquisition by structures light using off-theshelf-components. *Proceedings of SPIE: Videometrics and Optical Methods for 3D Shape Measuring,* 2001, vol. 4309, 220-231
- **Tsai, D.M. ; Chou, C.C.** A fast measure for video display inspection. *Machine Vision and Applications,* 2003, vol. 14, 192-196
- **Biehling, W. ; Deter, C. ; Dube, S. ; Hill, B. ; Helling, S. ; Isakovic, K. ; Klose, S. ; Schiewe, K.** LaserCave - Some Building Blocks for immersive Screens. *Proc. of Int. Status Conference on Virtual - and Augmented Reality,* 2004
- **Eltoukhy, H.A. ; Kavusi, S.** A Computationally Efficient Algorithm for Multi-Focus Image Reconstruction. *Proc. of SPIE Electronic Imaging,* 2003
- **Majumder, A. ; Welch, G.** Computer Graphics Optique: Optical Superposition of Projected Computer Graphics. *Proc. of Eurographics Workshop on Virtual Environment/ Immersive Projection Technology,* 2001